(19) **Europäisches Patentamt / European Patent Office / Office européen des brevets**

(11) **EP 3 899 350 B1**

(12) **FASCICULE DE BREVET EUROPEEN**

(45) Date de publication et mention de la délivrance du brevet:
**11.09.2024   Bulletin 2024/37**

(21) Numéro de dépôt: **19842818.7**

(22) Date de dépôt: **16.12.2019**

(51) Classification Internationale des Brevets (IPC):
**F17C 13/00** *(2006.01)*

(52) Classification Coopérative des Brevets (CPC):
**F17C 13/004;** F17C 2201/0157; F17C 2201/052;
F17C 2203/0358; F17C 2203/0379;
F17C 2203/0614; F17C 2221/033; F17C 2221/035;
F17C 2223/0153; F17C 2223/0161;
F17C 2250/032; F17C 2250/0417;
F17C 2250/0421; F17C 2250/043;
F17C 2250/0439;                                    (Cont.)

(86) Numéro de dépôt international:
**PCT/FR2019/053084**

(87) Numéro de publication internationale:
**WO 2020/128273 (25.06.2020 Gazette 2020/26)**

(54) **PROCEDE DE DETECTION DE FUITE SUR UNE CUVE ETANCHE ET THERMIQUEMENT ISOLANTE**

VERFAHREN ZUM ERKENNEN EINES LECKS IN EINEM ABGEDICHTETEN UND THERMISCH ISOLIERENDEN TANK

METHOD FOR DETECTING A LEAK IN A SEALED AND THERMALLY INSULATING TANK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **19.12.2018   FR 1873381**

(43) Date de publication de la demande:
**27.10.2021   Bulletin 2021/43**

(73) Titulaire: **Gaztransport et Technigaz**
**78470 Saint-Rémy-lès-Chevreuse (FR)**

(72) Inventeurs:
• **BUGNICOURT, Bertrand**
**78470 SAINT REMY LES CHEVREUSE (FR)**
• **SPITTAEL, Laurent**
**78470 SAINT REMY LES CHEVREUSE (FR)**
• **DUPONT, Nicolas**
**78470 SAINT REMY LES CHEVREUSE (FR)**
• **LE STANG, Jean-Yves**
**78470 SAINT REMY LES CHEVREUSE (FR)**

(74) Mandataire: **Loyer & Abello**
**9, rue Anatole de la Forge**
**75017 Paris (FR)**

(56) Documents cités:
**EP-A1- 1 939 606     DE-A1- 1 648 612**
**US-A- 4 404 843**

(52) Classification Coopérative des Brevets (CPC):
(Cont.)
F17C 2250/0443; F17C 2250/0491;
F17C 2250/0495; F17C 2260/033; F17C 2260/038;
F17C 2270/0107

**Description**

**Domaine technique**

L'invention se rapporte au domaine des cuves étanches et thermiquement isolantes pour stocker un gaz liquéfié à basse température, et plus particulièrement à un procédé de détection de fuite sur une cuve étanche et thermiquement isolante pour gaz liquéfié. De telles cuves peuvent être employés pour le stockage ou le transport de différents gaz, par exemple méthane, butane, éthylène, etc.

**Arrière-plan technologique**

Des cuves étanches et thermiquement isolantes à membranes sont notamment employées pour le stockage de gaz naturel liquéfié (GNL), qui est stocké, à pression atmosphérique, à environ -163°C. Ces cuves peuvent être installées sur un ouvrage flottant ou non (par exemple cuve terrestre ou structure de stockage classiquement réalisées en béton, dites GBS) et sont destinées au transport de gaz naturel liquéfié ou à recevoir du gaz naturel liquéfié servant de carburant pour la propulsion de l'ouvrage flottant ou non.

Dans l'état de la technique, les cuves étanches et thermiquement isolantes sont utilisées pour le stockage de gaz liquéfié, intégrées dans une structure porteuse, telle que la double coque d'un navire destiné au transport de gaz naturel liquéfié. Généralement, de telles cuves comportent une structure multicouche présentant successivement, dans le sens de l'épaisseur depuis l'extérieur vers l'intérieur de la cuve, une barrière d'isolation thermique secondaire retenue à la structure porteuse, une membrane d'étanchéité secondaire reposant contre la barrière d'isolation thermique secondaire, une barrière d'isolation thermique primaire reposant contre la membrane d'étanchéité secondaire et une membrane d'étanchéité primaire reposant contre la barrière d'isolation thermique primaire et destinée à être en contact avec le gaz naturel liquéfié contenu dans la cuve.

US 4,404,843 divulgue un procédé conforme au préambule de la revendication 1 et une installation conforme au préambule de la revendication 20. Afin de détecter les fuites, US 4,404,843 remplit les espaces contenant la barrière d'isolation thermique primaire et la barrière d'isolation thermique secondaire avec un gaz inerte. Selon les systèmes de confinement, les espaces primaire et secondaire sont régulés à des pressions différentes mais toujours supérieures à la pression atmosphérique Pour compenser les éventuels changements de pression dus à des changements de température à l'intérieur des espaces, ou compenser les variations de la pression atmosphérique, la pression de chaque espace est régulée et maintenue dans un gamme de pression relative constante par un système de régulation permettant d'injecter du gaz inerte ou d'en évacuer une partie à l'atmosphère.

Dans la demande US2017/0138536, il est indiqué que les cuves cryogéniques peuvent avoir des points chauds ou des points froids et donc que le système de détection de flux de gaz entrant et sortant des espaces d'isolation peut être mis en défaut et déclencher de fausses alarmes. Pour y remédier, ce document propose d'utiliser des gaz inertes différents pour les différents espaces d'isolation. La détection de fuite se fait par la détection d'un gaz ne devant pas se trouver dans l'espace considéré. Cette méthode de détection nécessite de disposer de plusieurs types de gaz inertes et donc de plusieurs circuits de distribution, ce qui est plus complexe à mettre en oeuvre sur un navire de transport gazier.

**Résumé**

Une idée à la base de l'invention est de n'utiliser qu'un seul gaz inerte tout en remédiant aux problèmes de l'état de la technique. A cet effet, des capteurs de température sont placés à de multiples endroits tout autour de la cuve contenant du gaz liquéfié afin de déterminer une cartographie thermique de l'espace d'isolation situé autour de la cuve et rempli de gaz inerte. A l'aide de cette cartographie thermique, il est proposé de calculer, de manière précise, la masse de gaz inerte présente dans l'espace d'isolation à deux instants donnés (méthode 2) et de comparer la variation de gaz ainsi calculée entre ces deux instants à une quantité de gaz mesurée sur les débits entrant et sortant de gaz entre ces deux instants (méthode 1). La loi de conservation de la masse voudrait que la variation de masse déterminée par l'une et l'autre méthode soit la même. Toute fuite de gaz vers l'extérieur du réservoir se traduira par un déséquilibre en ces deux résultats.

Selon un mode de réalisation, l'invention fournit un procédé de détection de fuite sur une cuve étanche et thermiquement isolante pour gaz liquéfié. Ladite cuve comporte une membrane d'étanchéité entourant le gaz liquéfié, la membrane d'étanchéité étant entourée d'un espace d'isolation séparant la membrane d'étanchéité d'une paroi de support elle-même étanche, l'espace d'isolation étant rempli de matériaux solides thermiquement isolants et d'un gaz inerte, l'espace d'isolation étant muni d'au moins un conduit d'injection et d'au moins un conduit d'extraction pour injecter et extraire le gaz inerte. Le procédé de détection comporte les étapes suivantes :

- déterminer une première variation de masse de gaz inerte entre un premier instant et un deuxième instant, la première variation correspondant à la résultante des masses totales de gaz inerte ajoutées par le conduit d'injection et enlevées par le conduit d'extraction entre le premier instant et le deuxième instant,

- déterminer une première masse de gaz inerte dans l'espace d'isolation au premier instant et une deuxième masse de gaz inerte dans l'espace d'isolation au deuxième instant au moyen de mesures de la pression et de la température dans un volume libre de l'espace d'isolation,

- calculer une deuxième variation de masse de gaz inerte entre le premier instant et le deuxième instant correspondant à la différence entre la deuxième masse et la première masse de gaz inerte, et

- comparer la première variation de masse de gaz inerte avec la deuxième variation de masse de gaz inerte et déclencher une alarme si un écart entre la première variation et la deuxième variation de masse de gaz inerte est supérieure à un premier seuil.

On entend par l'expression « gaz inerte » le (ou les) gaz présent dans l'espace d'isolation, à savoir classiquement un gaz neutre non réactionnel, du type diazote (N2) qui est le gaz initialement présent dans les espaces d'isolation et le gaz que l'on injecte au cours de la vie desdits espaces d'isolation. Néanmoins, le procédé selon l'invention fonctionne toujours lorsqu'il existe une pollution de gaz dans ces espaces d'isolation, typiquement par introduction non désirée d'hydrocarbure(s), tel que par exemple du méthane (CH4), dans ces espaces en particulier à l'occasion d'une fuite de la membrane (primaire) d'étanchéité. Dans cette dernière hypothèse, l'expression « gaz inerte » inclut ce ou ces gaz non désirés, tels que le méthane.

Le procédé et système selon l'invention pourra avantageusement comprendre un ou plusieurs capteurs aptes à analyser la nature des gaz présents dans les espaces d'isolation, ou en sortie desdits espaces, de manière à affiner le calcul des masses en fonction de la nature de ces gaz, le diazote (N2) ou par exemple du méthane (CH4). Ces capteurs sont avantageusement reliés au système d'analyse des gaz classiquement présent dans un transporteur (navire) ou stockeur (terrestre ou maritime) de gaz liquéfié.

Il est bien entendu que le terme de navire, utilisé dans la présente demande en lien avec la présente invention, n'est pas limité à un transporteur effectuant un trajet entre deux ports ou zones géographiques mais qu'il peut s'agir également d'un bateau statique, tel qu'une barge ou un FSRU (« Flotting Storage and Regasifisation Unit »), ou encore une structure de stockage et/ou de traitement située à terre.

On pourrait également exprimer la présente invention de la façon suivante.

L'invention fournit un procédé de détection de fuite sur l'espace d'isolation d'une cuve étanche et thermiquement isolante pour gaz liquéfié. Ladite cuve comporte une membrane d'étanchéité entourant le gaz liquéfié, la membrane d'étanchéité étant entourée d'un espace d'isolation séparant la membrane d'étanchéité d'une paroi de support elle-même étanche, l'espace d'isolation étant rempli de matériaux solides (et éventuellement poreux) thermiquement isolants et d'un gaz inerte, l'espace d'isolation étant muni d'au moins un conduit d'injection et d'au moins un conduit d'extraction pour injecter et extraire le gaz inerte. Le procédé de détection comporte les étapes suivantes :

- Méthode 1 : déterminer une première variation de masse de gaz inerte entre un premier instant et un deuxième instant, par intégration en fonction du temps des débits d'injection et d'extraction puis différenciation des débits intégrés

- Méthode 2 : déterminer une première masse de gaz inerte dans l'espace d'isolation au premier instant $t_1$ et une deuxième masse de gaz inerte dans l'espace d'isolation au deuxième instant $t_2$ au moyen de mesures de la pression et de la température dans le volume libre de l'espace d'isolation,

- calculer une deuxième variation de masse de gaz inerte entre le premier instant $t_1$ et le deuxième instant $t_2$ correspondant à la différence entre la deuxième masse et la première masse de gaz inerte, et

- comparer la première variation de masse de gaz inerte avec la deuxième variation de masse de gaz inerte et alerter l'opérateur si un écart entre la première variation et la deuxième variation de masse de gaz inerte est supérieure à un premier seuil.

Grâce à un tel procédé, il est possible de détecter une fuite sur un espace d'isolation de cuve cryogénique. Ainsi, l'invention peut être utilisée pour les cuves servant à stocker du gaz de pétrole liquéfié (GPL), constitué majoritairement de butane. Le transport ou stockage en cuve cryogénique peut se faire à -44°C à la pression atmosphérique et peut ne nécessiter qu'une cuve à simple espace d'isolation.

Dans le cas du gaz naturel liquéfié (GNL), constitué majoritairement de méthane, la température de stockage est de -162°C et nécessite un double espace d'isolation. Suivant un exemple de réalisation, l'objet du procédé de détection de fuite peut être employé dans un seul espace d'isolation ou dans les deux.

A cet effet, un premier mode de réalisation prévoit que la membrane d'étanchéité est une membrane d'étanchéité secondaire, l'espace d'isolation est un espace d'isolation secondaire et la cuve comporte une membrane d'étanchéité primaire située entre la membrane d'étanchéité secondaire et le gaz liquéfié, la membrane d'étanchéité secondaire et la membrane d'étanchéité primaire étant séparée par un espace d'isolation primaire rempli de matériaux solides (éventuellement poreux) thermiquement isolants et du gaz inerte.

A cet effet, un deuxième mode de réalisation prévoit que la membrane d'étanchéité est une membrane d'étanchéité primaire, l'espace d'isolation est un espace d'isolation primaire, l'écart est un écart primaire et la cuve comporte une membrane d'étanchéité secondaire située entre la membrane d'étanchéité primaire et la paroi extérieure, la membrane d'étanchéité primaire et la membrane d'étanchéité secondaire étant séparées par l'espace d'isolation primaire, la membrane d'étanchéité secondaire et la paroi de support étant séparées par un espace d'isolation secondaire rempli de matériaux solides (éventuellement poreux) thermiquement isolants et du gaz inerte.

Dans un mode préféré de cuve à double membrane, on réalise le procédé de détection de fuite sur les deux espaces d'isolation. Ainsi le deuxième mode de réalisation est modifié de sorte que, l'espace d'isolation secondaire étant muni d'au moins un conduit d'injection et d'au moins un conduit d'extraction pour injecter et extraire le gaz inerte, le procédé de détection comporte en outre les étapes suivantes :

- déterminer une troisième variation de masse de gaz inerte dans l'espace d'isolation secondaire entre le premier instant et le deuxième instant, la troisième variation correspondant à la résultante des masses totales de gaz inerte ajoutées par le conduit d'injection et enlevées par le conduit d'extraction entre le premier instant et le deuxième instant,

- déterminer une troisième masse de gaz inerte dans l'espace d'isolation secondaire au premier instant et une quatrième masse de gaz inerte dans l'espace d'isolation secondaire au deuxième instant au moyen de mesures de la pression et de la température dans un volume libre de l'espace d'isolation secondaire,

- calculer une quatrième variation de masse de gaz inerte dans l'espace d'isolation secondaire entre le premier instant et le deuxième instant correspondant à la différence entre la quatrième masse et la troisième masse de gaz inerte, et

- comparer la troisième variation de masse de gaz inerte avec la quatrième variation de masse de gaz inerte et déclencher une alarme si un écart secondaire entre la troisième variation et la quatrième variation de masse de gaz inerte est supérieure à un deuxième seuil.

Selon une présentation différente de ce mode préféré de cuve à double membrane (avec une détection de fuite sur les deux espaces d'isolation), ce deuxième mode de réalisation est modifié de sorte que, l'espace d'isolation secondaire étant muni d'au moins un conduit d'injection et d'au moins un conduit d'extraction pour injecter et extraire le gaz inerte, le procédé de détection comporte en outre les étapes suivantes :

- déterminer une troisième variation de masse de gaz inerte dans l'espace d'isolation secondaire entre le premier instant t1 et le deuxième instant t2 , par intégration en fonction du temps des débits d'injection et d'extraction puis différenciation des débits intégrés, la troisième variation correspondant à la résultante des masses totales de gaz inerte ajoutées par le conduit d'injection et enlevées par le conduit d'extraction entre le premier instant t1 et le deuxième instant t2,

- déterminer une troisième masse de gaz inerte dans l'espace d'isolation secondaire au premier instant t1 et une quatrième masse de gaz inerte dans l'espace d'isolation secondaire au deuxième instant t2 au moyen de mesures de la pression et de la température dans un volume libre de l'espace d'isolation secondaire,

- calculer une quatrième variation de masse de gaz inerte dans l'espace d'isolation secondaire entre le premier instant t1 et le deuxième instant t2 correspondant à la différence entre la quatrième masse et la troisième masse de gaz inerte, et

- comparer la troisième variation de masse de gaz inerte avec la quatrième variation de masse de gaz inerte et alerter l'opérateur si un écart secondaire entre la troisième variation et la quatrième variation de masse de gaz inerte est supérieure à un deuxième seuil.

Disposant de mesures sur deux espaces d'isolations, il est possible de réduire le risque de fausse détection en étudiant les éventuelles corrélations entre les écarts. Ainsi, si l'écart primaire est supérieur au premier seuil et/ou si l'écart secondaire est supérieur au deuxième seuil, et si la somme algébrique de l'écart primaire et de l'écart secondaire est inférieure à un troisième seuil, on peut déterminer la présence d'une fuite dans la membrane d'étanchéité secondaire.

En outre, si les écarts se compensent mutuellement cela peut signifier que la fuite est dans la membrane d'étanchéité secondaire. Si l'écart primaire est supérieur au premier seuil et/ou si l'écart secondaire est supérieur au deuxième seuil, et si la différence algébrique entre l'écart primaire et l'écart secondaire est supérieure à un quatrième seuil, on peut déterminer la présence d'une fuite dans au moins l'un des espaces d'isolation primaire et secondaire. Inversement, si cette différence entre l'écart primaire et l'écart secondaire est faible, cela indique une possible situation d'erreur systématique.

Les seuils utilisés sont déterminés en fonction des incertitudes de mesure cumulées sur la chaine de calcul. Afin de réduire les coûts, le nombre de capteurs de température est réduit à un nombre minimal tout en permettant de bien cartographier l'image thermique de tous les volumes des espaces d'isolation. Cependant, les espaces d'isolation disposent d'une conductivité thermique relativement faible, ce qui est lié à leur fonction première : isoler thermiquement la cuve. Or, lors d'un changement de température extérieure ou de température à l'intérieur de la cuve, la propagation thermique se fait avec une cinétique lente et cela entraine un risque de mesure supplémentaire lié à une phase transitoire.

Afin de s'affranchir d'une possible erreur transitoire, on peut réitérer les étapes précédentes entre un troisième instant correspondant au premier instant incrémenté d'une durée de confirmation et un quatrième instant correspondant au deuxième instant incrémenté de la durée de confirmation et on détermine la présence d'une fuite si ladite alarme est déclenchée à nouveau après l'écoulement de la durée de confirmation.

Considérant le changement important de température lors du remplissage de la cuve, le procédé est effectué après une durée supérieure à une durée de stabilisation prédéterminée après un remplissage de la cuve.

Selon différents modes de réalisation, les mesures de la pression et de la température peuvent être réalisées pendant une durée de mesure autour du, et par exemple après, le premier instant et autour du, et par exemple avant, le deuxième instant, la première masse et la deuxième masse étant des masses moyennes sur la durée de mesure. La durée de mesure peut être suffisamment courte pour que le gaz inerte ajouté ou extrait pendant la durée de mesure soit négligeable au vu de la masse totale de gaz inerte présent dans l'espace d'isolation. De manière préférée, aucun gaz inerte n'est ajouté dans ou extrait de l'espace d'isolation pendant la durée de mesure. La durée de mesure peut être inférieure à la durée séparant le premier instant et le deuxième instant. Par exemple, les première et deuxième mesures sont calculées de manière glissante au cours du temps.

Selon un exemple de réalisation, les mesures de température peuvent comporter des mesures réalisées à l'aide de capteurs de températures placés à une pluralité d'endroits sur la paroi de support et sur la membrane d'étanchéité secondaire. Ou alors, les mesures de température peuvent comporter des estimations calculées à partir de la température du fluide contenu dans la cuve, en sa phase liquide ou gazeuse.

Selon un autre exemple de réalisation, la première variation de masse de gaz inerte est mesurée en fonction d'un débit massique de gaz inerte au niveau d'une vanne d'injection du conduit d'injection et d'une vanne d'extraction du conduit d'extraction.

Le débit massique au niveau de la vanne d'injection et/ou de la vanne d'extraction peut être déterminé de plusieurs manières, par exemple en fonction d'un degré d'ouverture de la vanne d'injection et/ou de la vanne d'extraction. Le débit massique de gaz au niveau de la vanne d'injection et/ou de la vanne d'extraction peut être déterminé en fonction de la pression et de la température du gaz inerte en amont et en aval de ladite vanne. En variante, le débit massique au niveau de la vanne d'injection et/ou de la vanne d'extraction peut être mesuré par un débitmètre mesurant la masse de gaz au niveau de ladite vanne.

Afin d'améliorer la précision, les mesures de la pression et de la température pour déterminer la première ou deuxième masse de gaz inerte dans l'espace d'isolation, sont réalisées dans une pluralité de zones de l'espace d'isolation, l'ensemble des zones formant le volume libre de l'espace d'isolation.

Selon un autre mode de réalisation, l'invention fournit une installation de stockage de gaz liquéfié comportant une cuve étanche et thermiquement isolante qui comporte une membrane d'étanchéité entourant le gaz liquéfié, la membrane d'étanchéité étant entourée d'un espace d'isolation séparant la membrane d'étanchéité d'une paroi de support elle-même étanche, l'espace d'isolation étant rempli de matériaux solides (et éventuellement poreux) thermiquement isolants et d'un gaz inerte, l'espace d'isolation étant muni d'au moins un conduit d'injection et d'au moins un conduit d'extraction pour injecter et extraire le gaz inerte. La cuve comporte au moins un capteur de pression et une pluralité de capteurs de température configurés pour déterminer la pression et la température du gaz inerte enfermé dans un volume libre l'espace d'isolation. L'installation comporte des dispositifs de mesure de débit pour mesurer un débit de gaz inerte dans le conduit d'injection et dans le conduit d'extraction, et au moins un dispositif de détection de fuite. Le au moins un dispositif de détection de fuite est configuré pour :

- déterminer avec les dispositifs de mesure de débit une première variation de masse de gaz inerte entre un premier instant t1 et un deuxième instant t2, la première variation correspondant à la résultante des masses totales de gaz inerte ajoutées par le conduit d'injection et enlevées par le conduit d'extraction entre le premier instant et le deuxième instant,

- déterminer une première masse de gaz inerte dans l'espace d'isolation au premier instant t1 et une deuxième masse de gaz inerte dans l'espace d'isolation au deuxième instant t2 au moyen de mesures de la pression et de la température réalisées par le au moins un capteur de pression et la pluralité de capteurs de température dans un volume libre de l'espace d'isolation,

- calculer une deuxième variation de masse de gaz inerte entre le premier instant t1 et le deuxième instant t2 correspondant à la différence entre la deuxième masse et la première masse de gaz inerte, et

- comparer la première variation de masse de gaz inerte avec la deuxième variation de masse de gaz inerte et déclencher une alarme (par exemple en alertant un opérateur) si un écart entre la première variation et la deuxième variation de masse de gaz inerte est supérieure à un premier seuil.

Pour une installation de cuve à double membrane, la membrane d'étanchéité peut être une membrane d'étanchéité secondaire, l'espace d'isolation peut être un espace d'isolation secondaire et la cuve peut comporter une membrane d'étanchéité primaire située entre la membrane d'étanchéité secondaire et le gaz liquéfié, la membrane d'étanchéité secondaire et la membrane d'étanchéité primaire étant séparées par un espace d'isolation primaire rempli de matériaux solides (et éventuellement poreux) thermiquement isolants et d'un gaz inerte.

Selon une variante d'installation de cuve à double membrane, la membrane d'étanchéité peut être une membrane d'étanchéité primaire, l'espace d'isolation peut être un espace d'isolation primaire, l'écart peut être un écart primaire et la cuve peut comporter une membrane d'étanchéité secondaire située entre la membrane d'étanchéité primaire et la paroi de support, la membrane d'étanchéité primaire et la membrane d'étanchéité secondaire étant séparées par l'espace d'isolation primaire, la membrane d'étanchéité secondaire et la paroi de support étant séparées par un espace d'isolation secondaire rempli de matériaux solides (et éventuellement poreux) thermiquement isolants et d'un gaz inerte.

Selon différents modes de réalisation, l'espace d'isolation secondaire est muni d'au moins un conduit d'injection et d'au moins un conduit d'extraction pour injecter et extraire le gaz inerte. La cuve comporte au moins un capteur de pression. Des capteurs de la pluralité de capteurs de température sont également configurés pour déterminer la température du gaz inerte enfermé dans l'espace d'isolation secondaire. L'installation comporte des dispositifs de mesure de débit pour mesurer un débit de gaz inerte dans le conduit d'injection et dans le conduit d'extraction. Le dispositif de détection de fuite est configuré pour mettre en oeuvre les différentes du procédé.

Selon un mode de réalisation préféré, l'installation de stockage de gaz liquéfié est embarquée sur un navire de transport de gaz liquéfié, le navire de transport pouvant comporter une ou plusieurs installations de stockage de gaz liquéfié.

Brève description des figures

. L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

[fig.1] La figure 1 représente un exemple de navire intégrant des cuves et muni d'un dispositif de détection de fuite.

[fig.2] La figure 2 représente schématiquement une cuve du navire de la figure 1 en coupe transversale.

[fig.3] La figure 3 représente schématiquement une cuve du navire de la figure 1 en coupe longitudinale.

[fig.4] La figure 4 illustre un exemple de réalisation d'un mur de cuve étanche et thermiquement isolante pour gaz liquéfié.

[fig.5] La figure 5 illustre un premier de mode réalisation d'un calcul de débit de gaz (méthode 1).

[fig.6] La figure 6 illustre un deuxième de mode réalisation d'un calcul de débit de gaz (méthode 1).

[fig.7] La figure 7 illustre un mode de calcul de la température au niveau d'une membrane d'étanchéité primaire à l'aide d'une nombre réduit de capteurs de température.

[fig.8] La figure 8 est un schéma fonctionnel d'un dispositif de détection de fuite.

[fig.9] La figure 9 représente un organigramme de fonctionnement du dispositif de la figure 8.

**Description des modes de réalisation**

L'invention va à présent être décrite à l'aide d'un mode de réalisation principal autour duquel différentes variantes seront évoquées ou décrites. A cet effet, une même référence est utilisée sur toutes les figures et dans la description pour décrire un même élément.

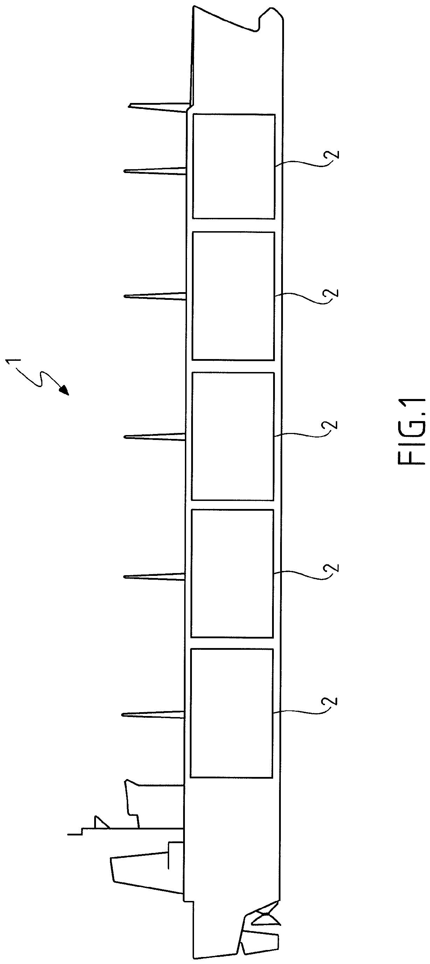

La figure 1 représente un navire méthanier 1 disposant d'une pluralité de cuves 2 destinées à recevoir du gaz liquéfié à une pression voisine de la pression atmosphérique. Chacune des cuves 2 est une cuve étanche et thermiquement isolante afin de conserver le fluide transporté à sa température de liquéfaction, fonction de la pression de l'atmosphère gazeuse, soit pour du gaz naturel à une température de -162°C environ. De telles cuves peuvent être réalisées en utilisant différentes techniques, par exemple la technologie commercialisée sous la marque Mark III ® ou la technologie commercialisée sous la marque NO96 ® qui appartiennent toutes deux à la déposante.

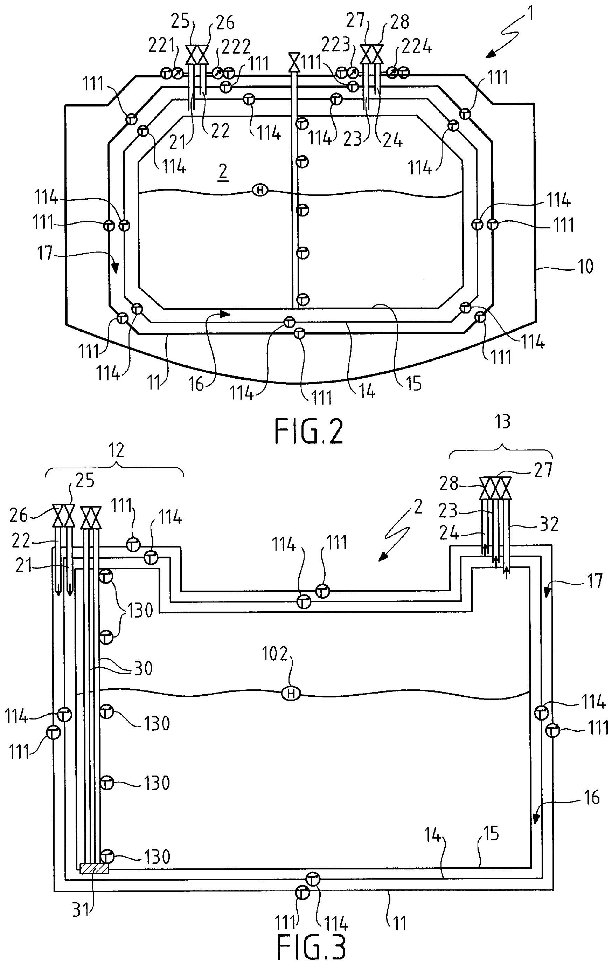

Une des cuves 2 est détaillée à l'aide des figures 2 et 3. La figure 2 montre une coupe transversale du navire 1 qui comporte une double coque constituée d'une paroi externe 10 en contact avec la mer et d'une paroi interne 11 qui sert de paroi de support à une cuve 2 à double membrane. Dans ce mode de réalisation non limitatif représenté sur la figure 2, la double coque encercle la cuve 2 et dispose de deux parties saillantes communément appelées dôme liquide 12 et dôme gaz 13 permettant d'assurer les échanges de fluide liquide et gazeux entre la cuve et le terminal de chargement ou de déchargement et de visiter la cuve, ainsi que pour faire passer des tuyaux selon la technique connue. La paroi interne 11 se doit d'être étanche y compris au niveau des dômes liquide et gaz.

La paroi interne 11 est recouverte de blocs d'isolation qui sont fixés à cette paroi interne afin, d'une part, d'assurer une isolation thermique et, d'autre part, à servir de support à une membrane d'étanchéité secondaire 14. D'autres blocs d'isolation sont placés sur la membrane d'étanchéité secondaire 14 afin, d'une part, d'assurer une isolation thermique et, d'autre part, à servir de support à une membrane d'étanchéité primaire 15. La membrane d'étanchéité primaire 15 est en contact avec le gaz liquéfié et le ciel gazeux et définit le volume utile de la cuve. La membrane d'étanchéité secondaire 14 sert de sécurité en cas de fuite au niveau de la membrane d'étanchéité primaire. En outre, l'espace entre la membrane d'étanchéité primaire 15 et la membrane d'étanchéité secondaire 14 constitue un espace d'isolation primaire 16 et l'espace entre la membrane d'étanchéité secondaire et la paroi interne 11 constitue un espace d'isolation secondaire 17.

La cuve 2 comporte également une structure métallique 30 supportant la tuyauterie propre à la gestion du gaz liquéfié et au moins une pompe 31 pour vider la cuve de gaz liquéfié ainsi qu'un tuyau permettant la remplir par la partie basse et/ou la partie haute. La cuve comporte également un collecteur de vapeur 32 pour le gaz situé dans la cuve et résultant de la vaporisation spontanée du gaz liquéfié. La cuve peut comporter bien d'autres éléments non représentés, tels que par exemple des pulvérisateurs servant à rabaisser la température de la phase vapeur.

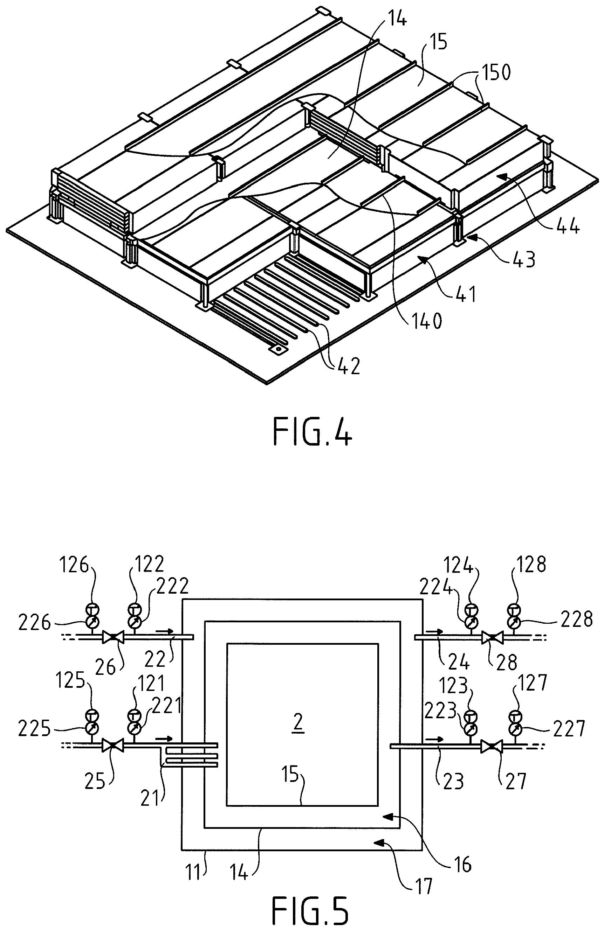

La figure 4 détaille un exemple de réalisation d'un mur de cuve selon la technologie de marque NO96®. Des blocs d'isolation 41 sont placés dans l'espace d'isolation secondaire 17 sur des boudins de résine polymérisable 42 et fixés par des dispositifs d'ancrage 43. Les boudins de résine polymérisable 42 ont pour but de rattraper les écarts entre la surface théorique prévue pour la paroi interne 11 et la surface imparfaite résultant des tolérances de fabrication et de répartir les efforts des blocs d'isolation 41 sur la paroi interne 11 de manière relativement homogène. Dans certains systèmes, ces boudins de résine polymérisable assurent en outre le maintien du panneau d'isolation contre la double-coque. Les dispositifs d'ancrage 43 assurent la fixation des blocs d'isolation 41 à la paroi interne 11. La membrane d'étanchéité secondaire 14 est ensuite déposée sur les blocs d'isolation 41. Dans l'exemple représenté, la membrane d'étanchéité secondaire 14 est en Invar. Elle est déposée en longues bandes placé les unes à côté des autres et soudées entre elles sur des bords relevés. Des blocs d'isolation 44 sont ensuite placés sur la membrane d'étanchéité secondaire 14 et fixés à travers cette membrane d'étanchéité secondaire aux blocs d'isolation 41 de l'espace d'isolation secondaire par les moyens d'ancrage 43. Puis la membrane d'étanchéité primaire 15 est déposée et fixée sur les blocs d'isolation 44. A titre d'exemple la membrane d'étanchéité primaire 15 peut également être réalisée par des bandes d'invar soudées entre elles par des bords relevés.

De très nombreuses variantes permettent de réaliser une cuve à double membrane. Les membranes 14 et 15 peuvent être réalisées en Triplex ou en acier inoxydable gaufré. Les blocs d'isolation 41 et 44 peuvent être identiques ou différents. Ils sont réalisés en matériau fortement isolant tel que du bois, de la mousse polymère, de la laine de verre et autres. Plusieurs variantes de système d'ancrage sont également connues. En outre, afin de réduire la conduction thermique au niveau du système d'ancrage 43, il est possible de remplir les interstices entre les blocs isolant avec de la laine de verre ou un autre type de matériau isolant.

Bien que les espaces d'isolation primaire 16 et secondaire 17 soient remplis de matériau isolant, il reste un certain volume libre permettant la présence d'un gaz. Pour des raisons de sécurité, l'air des espaces d'isolation 16 et 17 est remplacé par un gaz inerte, par exemple de l'azote. Cette passivation à l'azote permet d'éviter l'apparition d'un mélange, inflammable en cas de fuite de gaz naturel dans le premier espace d'isolation et dans le deuxième espace d'isolation. A cet effet, les espaces d'isolation primaire 16 et secondaire 17 sont munis de conduits d'injection 21 et 22 et de conduits d'extraction 23 et 24 de gaz inerte. Les conduits d'injection 21 et 22 sont par exemple placés au niveau du dôme liquide et sont connectés à une réserve d'azote sous pression par l'intermédiaire de vannes d'injection 25 et 26. Les conduits d'extraction 23 et 24 sont par exemple placés au niveau du dôme gaz et sont connectés à l'atmosphère ou à un dispositif permettant de brûler les gaz évacuer par des vannes d'extraction 27 et 28.

Les espaces d'isolation étant remplis d'azote, ils participent également à la détection des fuites. Une légère pressurisation de l'azote est réalisée dans les espaces primaire 16 et secondaire 17 par rapport à la pression atmosphérique. Une différence de pression peut exister également entre l'espace d'isolation primaire 16 et l'espace d'isolation secondaire 17. Les différences de pressurisation entre les espaces d'isolation sont de quelques dizaines de millibars et sont fixés pour diverses raisons, telles que la direction des fuites et/ou une précharge des membranes. Une régulation de pression est réalisée sur ces deux espaces d'isolation 16 et 17 afin de maintenir la pression de chaque espace dans la gamme de pression qui lui a été fixée.

Lorsque la paroi interne 11 de la coque, la membrane d'étanchéité primaire 15 ou la membrane d'étanchéité secondaire 14 présente une rupture alors une fuite est possible. Suivant le type de fuite, différents cas peuvent se produire. Du gaz inerte peut se déplacer d'un espace vers l'autre ou vers l'extérieur ou vers la cuve. Du gaz naturel liquéfié ou de l'eau peut aussi s'infiltrer dans l'un des espaces d'isolation primaire 16 ou secondaire 17. Les cuves à double membranes présentent, de par leur constitution, l'avantage qu'une simple fuite est sans danger. En effet, la fuite que l'on souhaite à tout prix éviter est la fuite de gaz naturel vers la coque. En cas de rupture de la membrane d'étanchéité primaire, la membrane d'étanchéité secondaire sert de sécurité. Pour garantir cette sécurité, il est impératif de garantir l'intégrité de la membrane d'étanchéité secondaire et de la paroi interne 11 et par conséquent de s'assurer périodiquement ou en permanence son étanchéité, donc son intégrité.

Pour vérifier l'intégrité, il est proposé de réaliser une détection de fuite sur les espaces primaire 16 et secondaire 17 en vérifiant que la quantité de gaz inerte présente dans chacun des espaces 16 et 17 correspond à la quantité de gaz inerte que l'on a effectivement mise dans chaque espace.

Mesure de variation de masse par le débit (méthode 1)

Par la mesure de la quantité de gaz inerte injecté et extrait d'un espace d'isolation, il est possible de connaître la quantité ajoutée et enlevée entre deux instants. Une première mesure de variation est réalisée pour obtenir la variation de la quantité de gaz inerte ajouté et/ou enlevé des espaces d'isolation 16 et 17 entre deux instants t1 et t2.

Cette première mesure de variation peut se faire de différentes manières. Selon un premier exemple de réalisation il suffit de déterminer la différence de pression à l'aide de capteurs de pression 221, 222, 223 224, 225, 226, 227 et 228 placés sur les conduits d'injection 21, 22 et d'extraction 23, 24 tout en connaissant le pourcentage/taux de l'ouverture des vannes d'injection 25, 26 et d'extraction 27 et 28. Une variante peut consister en une détermination analytique des différentes pressions amont et aval des vannes, en lieu et place des capteurs de pression 221, 222, 223 224, 225, 226, 227 et 228 susmentionnés.

[0048]    , Ces informations permettent, en complément des capteurs de température 121 à 128 placés en amont et en aval de chacune des vannes d'injection 25, 26 et d'extraction 27, 28, à partir d'une équation connue de l'homme du métier (en fonction de la pression amont/aval, caractéristique de vanne ou « CV », la densité du gaz à la température amont) de déterminer le débit massique des vannes en fonction de leur taux d'ouverture.

Le temps passé avec un taux d'ouverture donné permet de connaître la quantité ajoutée dans, ou extraite, de chaque espace d'isolation. La somme du gaz ajouté moins la somme du gaz extrait entre deux instants t1 et t2 permet de déterminer pour chaque espace d'isolation la variation de la masse de gaz entre ces deux espaces, en fonction des taux d'ouverture, donc du débit massique des vannes 25 à 28 dont le rôle principal est de maintenir automatiquement la pression de l'espace d'isolation dans la gamme de pressions opérationnelles. Si les vannes 25 à 28 sont manipulées manuellement, il peut être préférable d'avoir recours à une autre méthode de mesure de débits.

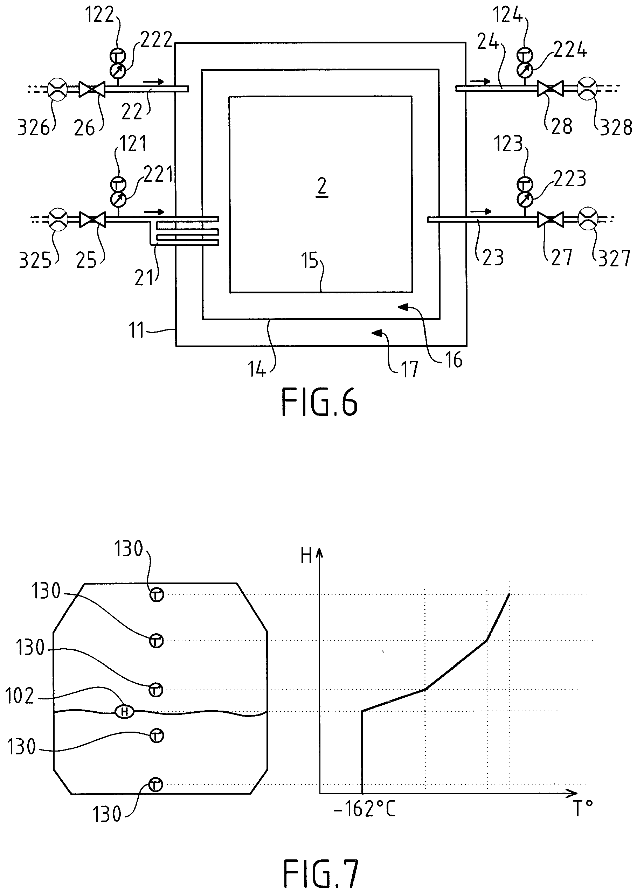

Selon un deuxième exemple, illustré à l'aide de la figure 6, des débitmètres 325 à 328 sont placés sur les conduits d'injection 21, 22 et d'extraction 23, 24, par exemple en amont des vannes d'injection 25, 26 et en aval des vannes d'extraction 27, 28. Les débitmètres 325 à 328 permettent de mesurer ou de calculer la quantité de gaz injecté ou extrait de chaque espace d'isolation 16 ou 17. La somme du gaz injecté moins la somme du gaz extrait entre les deux instants t1 et t2 permet de déterminer de manière précise pour chaque espace d'isolation la variation de la quantité de gaz entre ces deux instants t1 et t2.

Le calcul de la quantité de gaz injecté ou extrait de chaque espace d'isolation peut résulter d'une application combinée du premier et deuxième exemple, autrement dit en combinant l'utilisation de capteurs de pression 221, 222, 223 224, 225, 226, 227 et/ou 228 placés sur les conduits d'injection 21, 22 ou d'extraction 23, 24 tout en connaissant le pourcentage/taux de l'ouverture des vannes d'injection 25, 26 ou d'extraction 27, 28 et un ou plusieurs parmi les débitmètres 325 à 328 placés sur les conduits d'injection 21, 22 ou d'extraction 23, 24.

Si l'on exprime différemment les deux exemples susvisés de réalisation de la méthode 1, de façon plus schématique, on peut considérer la présentation donnée ci-dessous.

Pour le premier exemple présenté ci-dessus, il faut au moins :

- un capteur de pression en amont de la vanne d'entrée pour chacun des espaces d'isolation primaire 16 et secondaire 17 (étant entendu qu'il existe déjà classiquement un capteur de pression en aval de la vanne d'entrée des espaces primaire 16 et secondaire 17), et

- un capteur de pression en aval de la vanne de sortie pour chacun des espaces d'isolation primaire 16 et secondaire 17 (en sachant qu'il existe déjà un capteur de pression en amont de la vanne d'entrée de sortie primaire 16 et secondaire 17), et

- un capteur de température en amont de la vanne d'entrée pour chacun des espaces d'isolation primaire 16 et secondaire 17, et

- un capteur de température en amont de la vanne de sortie pour chacun des espaces d'isolation primaire 16 et secondaire 17.

Les capteurs de température et les paires de capteurs de pression positionnées de part et d'autre d'une vanne, permettent de mesurer/calculer les débits d'entrée et de sortie respectivement de chacun des espaces d'isolation primaire 16 et secondaire 17.

Pour le deuxième exemple présenté ci-dessus, il faut au moins :

- un débitmètre est installé en amont (ou en aval) de la vanne d'entrée pour chacun des espaces d'isolation primaire 16 et secondaire 17, et

- un débitmètre est installé en aval (ou en amont) de la vanne de sortie pour chacun des espaces d'isolation primaire 16 et secondaire 17.

Les débitmètres, de part et d'autre de la cuve, permettent de mesurer les débits d'entrée et de sortie respectivement de chacun des espaces d'isolation primaire 16 et secondaire 17.

**Mesure de variation de masse par l'évaluation de masse (méthode 2)**

Pour vérifier cette première mesure de variation, il convient de mesurer la quantité exacte de gaz inerte effectivement présent dans les espaces d'isolation 16 et 17 aux deux mêmes instants (t1 et t2). La mesure de la quantité de gaz inerte effectivement présent dans chaque espace d'isolation 16 et 17 est faite en prenant en compte le volume, la température et la pression du gaz inerte. Toutefois, vu la taille des cuves, et la nature des espaces d'isolation 16 et 17, il convient de prendre en compte que la température et la pression ne sont pas homogènes à l'intérieur des espaces d'isolation.

Idéalement, pour déterminer la quantité exacte de gaz inerte, il conviendrait de connaître la température et la pression qui s'appliquent à chaque volume élémentaire de l'espace d'isolation 16 ou 17 pour en déduire la quantité de gaz contenu. Puis, la sommation de la quantité de gaz contenu dans chaque espace élémentaire permettrait de déterminer la quantité de gaz totale contenue dans l'espace d'isolation 16 ou 17.

En pratique, il est possible de diviser chaque espace d'isolation en une pluralité de volumes dont il est possible de déterminer ou estimer de manière relativement précise la température et la pression avec un nombre limité de capteurs. Bien entendu, plus le nombre de capteurs sera important plus l'estimation sera précise.

Pour déterminer le nombre de capteurs, il a été pris en compte dans l'exemple décrit ci-dessus que les membranes primaire et secondaire 14 et 15 ainsi que la paroi interne 11, vu leurs faibles épaisseurs et leurs conductivités thermiques élevées, sont à une température uniforme indépendamment du côté où l'on se trouve. Également, entre deux points de mesure de température séparés par un milieu homogène, on considère un gradient linéaire de la température entre ces deux points de mesure.

Des capteurs de température 111 sont placés à différents endroits sur la paroi externe 11. Typiquement, au moins un capteur de température 111 est placé sur chaque face constituant la paroi interne 11. Des capteurs de température 114 sont placés à différents endroits sur la membrane d'étanchéité secondaire 14. Typiquement, au moins un capteur de température 114 est placé sur chaque face constituant la membrane d'étanchéité secondaire 14. La température au niveau de la membrane d'étanchéité primaire est déterminée par la température à l'intérieur de la cuve 2. Quelques capteurs de température 130 sont fixés par exemple sur la structure de maintien des lignes de remplissage et d'évacuation du fluide30 et permettent de mesurer la température du fluide dans ses phases liquide et vapeur. Une installation séparée permet par ailleurs de connaître en permanence le niveau de remplissage de la cuve (position en hauteur de l'interface séparant la phase liquide de la phase gazeuse du fluide, 102).

La température en tout point de la paroi interne 11 peut être déterminée en appliquant une formule de calcul de moyenne pondérée en fonction des capteurs de température 111 situés dans le voisinage du point. Préférentiellement, on place un nombre de capteurs de température plus important aux endroits susceptibles de fortes variations de températures. Typiquement, la face supérieure de la paroi interne 11 qui peut être réalisée sous la forme d'un pont intermédiaire du navire comporte un nombre de capteurs de température 111 plus élevé que les autres faces. En effet, les dômes liquide 12 et gaz 13 sont sur la partie supérieure de la cuve 2, ils soutiennent la structure de maintien 30 et les traversées des conduits d'injection 21, 22 et d'extraction 23, 24 et collecteur de vapeur 32 qui sont à des températures liées aux gaz transportés, donc plutôt froides, tout en étant également sous la chaleur du soleil et donc à une température plutôt élevée à d'autres endroits.

La température en tout point de la membrane d'étanchéité secondaire 14 est déterminée également par un calcul de moyenne pondérée en fonction des capteurs de température 114 situés dans le voisinage du point. Le nombre de capteurs 114 dépend également de l'homogénéité supposée de la température sur la face considérée.

L'espace d'isolation secondaire 17 est rempli de matériaux solides (éventuellement poreux) isolants entre la membrane d'étanchéité secondaire 14 et la paroi interne 11. Dans un matériau solide homogène, après un certain temps d'établissement, on arrive à une situation d'équilibre dans laquelle le gradient de température est linéaire entre deux points du matériau. La température en un point de l'espace d'isolation secondaire 17 dépend de la localisation de ce point par rapport à la paroi interne 11 et à la membrane d'étanchéité secondaire 14. La température peut être calculée par une simple moyenne pondérée entre les points les plus proches de la paroi interne 11 et de la membrane d'étanchéité secondaire 14.

La température au niveau de la membrane d'étanchéité primaire 15 est déterminée par la température du fluide dans ses phases liquide et vapeur. Le fluide est maintenu dans la cuve à la température d'équilibre entre sa phase liquide et sa phase vapeur (fonction de la pression interne de la cuve). Des mesures expérimentales ont montré que la température du gaz en phase vapeur est stratifiée en couche de température croissante en fonction de l'éloignement de la surface du gaz liquéfié.

Du bas de la cuve 2 jusqu'au sommet de la cuve, la température de la membrane d'étanchéité primaire 15 est la température de la cargaison à la même hauteur. Pour les hauteurs de cuve correspondant aux positions des capteurs de température 130, la température correspond à la température mesurée par les capteurs de température 130. Pour les autres hauteurs, une interpolation linéaire entre les températures est faite entre les températures connues. La figure 7 illustre une telle approximation de la température à l'intérieure de la cuve 2 faite à l'aide des capteurs de température 130 et du capteur de niveau 102. Cette approximation donne la température de la membrane d'étanchéité primaire 15 en fonction de la hauteur du point de mesure.

L'espace d'isolation primaire 16 est rempli de matériaux solides (et éventuellement poreux) isolants entre la membrane d'étanchéité secondaire 14 et la membrane d'étanchéité primaire 15. La température en un point de l'espace d'isolation primaire 16 dépend de la localisation de ce point par rapport à la membrane d'étanchéité primaire 15 et à la membrane d'étanchéité secondaire 14.

Les capteurs de pression 221, 222, 223 et 224 placés sur les conduits d'injection 21, 22 et d'extraction 23, 24 permettent de mesurer la pression au niveau du haut des espaces d'isolation primaire 16 et secondaire 17. La pression ainsi mesurée peut être considérée comme la pression du gaz en tout point des espaces d'isolation 16 et 17. Dans un exemple, la pression peut être corrigée en fonction de la hauteur de gaz à l'intérieur des espaces d'isolation 16 et 17.

Les espaces d'isolation 16 et 17 sont de tailles et de formes connues par le constructeur de la cuve. Également, les matériaux solides remplissant ces espaces sont connus ainsi que leurs porosités et les espaces libres ne contenant pas de matériaux solides. De par cette connaissance, il est possible de connaître pour n'importe quel espace élémentaire de chaque espace d'isolation 16 ou 17 le volume libre qui peut être rempli de gaz. La masse élémentaire de ce volume élémentaire peut être estimée par exemple à l'aide de la formule suivante, dérivée de la loi des gaz parfaits :

[Math. 1]

$$Masse\ élémentaire = M_N \times \frac{P}{R.T} \times \varphi \times dV$$

Dans ce cas, la masse volumique p du gaz inerte peut être déterminée par :

[Math. 2]

$$\rho = \frac{P.M_N}{R.T}$$

Pour lequel MN est la masse molaire de l'azote (ici, dans cet exemple, on ne considère pas l'hypothèse de la présence de gaz non désiré), P est la pression d'azote de l'espace élémentaire, R est la constante universelle des gaz parfaits, T est la température de l'espace élémentaire, φ est la porosité moyenne du milieu de l'espace élémentaire et dV est le volume de l'espace élémentaire.

La sommation de toutes les masses élémentaires permet de déterminer la masse totale de gaz inerte présente dans chacun des espaces d'isolation 16 et 17.

Il est également possible de réaliser une détermination de la masse de gaz en utilisant une division de chacun des espaces d'isolation en une pluralité de volumes ayant des caractéristiques particulières qui permettent de simplifier le calcul. Cela revient à caractériser les espaces libres qui permettent au gaz inerte de circuler dans chacun des espaces d'isolation 16 et 17. Si les blocs d'isolation 41 et 44 sont réalisés en mousse à cellules fermées, la porosité est de l'ordre de 1%. A titre d'exemple, les interstices entre les blocs d'isolation qui sont remplis de laine de verre ont une porosité de l'ordre de 85 %. En outre, à proximité des membranes, il existe des espaces libres correspondant aux joints soudés faits perpendiculairement au plan de la membrane et/ou aux joints de dilatation desdites membranes lorsqu'elles sont en acier inoxydable. Les volumes libres ainsi définis sont connus et modélisables indépendamment les uns des autres.

Vu la petite dimension des espaces libres à proximité des membranes, la totalité du gaz inerte dans ces espaces libres est à la même température que la membrane, ce qui permet de déterminer la masse de gaz en fonction de la température moyenne de la membrane dès lors que l'on connaît le volume concerné. Le champ de température dans un espace d'isolation peut être approximé par une loi selon laquelle la température est répartie linéairement dans le sens de l'épaisseur de l'espace d'isolation. Il est possible de déterminer la masse de gaz contenu dans les espaces libres en prenant en compte la porosité du milieu. La somme des masses de gaz contenu dans les espaces libres d'un espace d'isolation 16 ou 17 donne la masse totale de gaz enfermé dans ledit espace d'isolation.

Selon une variante encore plus simplifiée, on détermine le volume libre de gaz inerte localisé dans chacun des demi-espaces libres situés entre la moitié de chaque espace d'isolation 16 ou 17 et la membrane 14 ou 15 ou la paroi interne 11. Puis, la température moyenne des membranes 14 ou 15 ou de la paroi interne 11 est appliquée au demi-espace libre à proximité pour obtenir la masse de gaz correspondante qui est ensuite sommée avec l'autre masse de gaz de l'espace d'isolation considéré pour obtenir la masse de gaz dans chaque espace.

Quelle que soit la méthode de calcul de masse utilisée, il convient d'effectuer une mesure de masse à l'instant t1 et une mesure de masse à l'instant t2 afin de pouvoir en déduire une deuxième mesure de variation. La deuxième mesure de variation correspond également à une quantité de gaz inerte ajouté et/ou enlevé des espaces d'isolation 16 et 17 qui peut être comparée à la première mesure de variation.

Pour des raisons de précision du calcul de masse, les mesures de niveau de gaz liquéfié, de pression et de température peuvent être moyennées sur des périodes de mesure. En effet, une variation transitoire sur l'une de ces mesures peut fausser le calcul de masse alors qu'il suffit de prendre une valeur moyenne sur une petite période de mesure pour s'affranchir d'une variation transitoire. A titre d'exemple, le gaz liquéfié présente une surface de liquide libre sur laquelle se forment des vagues. Le dispositif de mesure de niveau 102 peut s'en trouver affecté. Également à titre d'exemple, lorsque l'on injecte ou lorsque l'on extrait de l'azote dans l'un des espaces d'isolation, cela fait baisser localement et temporairement la température au niveau de la vanne et peut créer une mesure erronée si la mesure est effectuée immédiatement avant ou après ou pendant une telle opération. De même, la taille importante d'une cuve fait que la circulation effective du gaz dans les espaces d'isolation n'est pas instantanée. L'équilibre de pression après l'ajout ou l'extraction d'azote n'est pas immédiat mais peut prendre quelques dizaines de secondes.

Ainsi on peut prévoir une période de mesure par exemple de l'ordre de 5 à 15 mn pour s'affranchir des erreurs de mesure. Des périodes de mesure peuvent être placées autour des premier et deuxième instants t1 et t2. Par exemple, l'une des périodes commence après le premier instant t1 et l'autre des périodes se termine avant le deuxième instant t2, le deuxième instant t2 ayant lieu après le premier instant t1. De préférence, l'écart entre les instants t1 et t2 de mesure est très supérieur à la période de mesure.

Afin d'obtenir une mesure la plus exacte, il est préférable de ne pas ajouter ou extraire de gaz inerte pendant les périodes de mesure. Toutefois, cela n'est possible que si l'on interdit toute action pendant une période de mesure, ce qui n'est pas forcément possible. Une autre possibilité est d'effectuer les mesures en permanence et de réaliser des mesures moyennes de manière glissante dans le temps. Un critère qui peut être utilisé pour choisir une période de mesure parmi les moyennes glissantes consiste en ce qu'il n'y a pas d'ajout ou d'extraction de gaz durant une période glissante ou que l'ajout ou l'extraction de gaz sur une période glissante est suffisamment faible pour être négligeable.

Détection de fuite

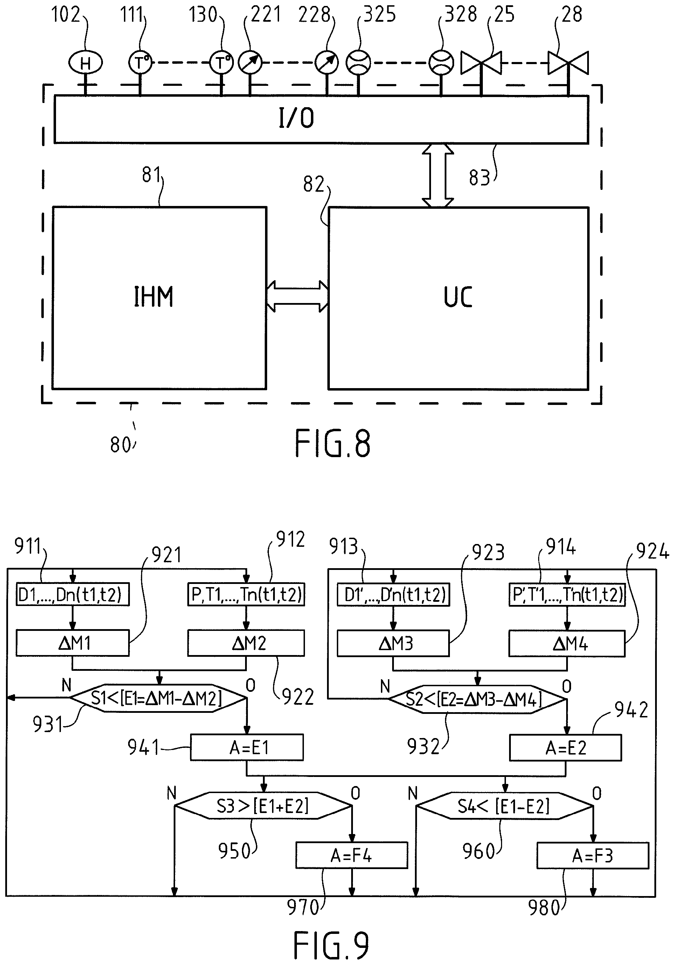

Les différents principes de mesure ayant été expliqués, il convient à présent de décrire comment une fuite est détectée. La figure 8 représente un schéma fonctionnel d'un dispositif de détection de fuite 80 qui comporte principalement une interface homme-machine 81, une unité de calcul 82 et un circuit d'interface d'entrée/sortie 83. L'interface homme-machine 81 sert à visualiser les résultats des mesures, des alarmes de fuite, et à permettre également une interaction avec le système s'il y a lieu. L'unité de calcul 82 comporte un microprocesseur et de la mémoire afin de mettre en oeuvre des programmes et de stocker des informations de manière temporaire et également permanente. Le circuit d'interface d'entrée/sortie 83 est un circuit qui est relié à tous les capteurs placés sur la cuve 2 et notamment le capteur de niveau 102, tout ou partie des capteurs de température 111 à 130, tout ou partie des capteurs de pressions 221 à 228, éventuellement les débitmètres 325 à 328, et les entrées de commande de vannes d'injection 25, 26 et d'extraction 27, 28.

Selon un mode de réalisation particulier, le dispositif de détection de fuite 80 est un ordinateur standard situé dans le poste de pilotage du navire 1 et l'interface d'entrée/sortie 83 est une carte d'interface de communication standard permettant de communiquer avec les capteurs et de commander les vannes. Une telle carte de communication peut être par exemple compatible avec un standard USB si tous les capteurs le sont aussi, ou être une carte de communication par radio de type Wifi ou Zigbee si les capteurs sont munis d'une telle interface de communication.

Parmi les programmes mis en oeuvre par l'unité de calcul 82, un premier programme est relatif à la réalisation des mesures. Suivant l'option choisie pour le calcul ce premier programme est soit déclenché à chaque fois que l'on veut réaliser une mesure soit tourne en permanence et mémorise régulièrement des mesures effectuées qui seront exploitées par la suite. L'important étant que le programme de mesure permette de réaliser des mesures selon l'une des méthodes précédemment évoquées et permettant de mettre en oeuvre un deuxième programme de détection de fuite détaillé ci-après.

La figure 9 illustre un mode de réalisation du procédé de détection de fuite mis en oeuvre par le dispositif de détection de fuite 80. Le procédé de la figure 9 comporte deux boucles indépendantes propre à chaque espace d'isolation 16 et 17.

La première boucle réalise deux étapes d'acquisition de données 911 et 912 visant à récupérer toutes les données permettant de déterminer une variation de masse de gaz inerte dans l'espace d'isolation primaire 16 selon les deux modes de calcul précédemment évoqués. Une première étape d'acquisition de données consiste à récupérer les mesures de débit de gaz injecté et extrait entre les instants t1 et t2 par les conduits d'injection 21 et d'extraction 23. Suivant le programme de mesure mis en oeuvre, une telle étape 911 peut être réalisée soit en déclenchant un début de mesure de débit à l'instant t1 et en indiquant la fin de la mesure de débit à l'instant t2, soit en lisant et en intégrant toutes les mesures de débit réalisées entre l'instant t1 et l'instant t2 qui correspondent à l'injection et à l'extraction de gaz entre ces deux instants.

Une deuxième étape d'acquisition de données 912 consiste à récupérer les mesures de pression et de température propres à l'espace d'isolation primaire pour les instants t1 et t2. Suivant le programme de mesure mis en oeuvre, une telle étape 912 peut être réalisée soit en déclenchant une mesure de pression et des mesures de température à l'instant t1 (ou sur une période suivant l'instant t1) et à l'instant t2 (ou sur une période précédant l'instant t1), soit en lisant les mesures effectuées autour des instant t1 et t2 et en les intégrant sur une période de mesure qui convient.

Typiquement, la période de temps qui sépare t1 et t2 doit être suffisamment grande pour pouvoir discriminer une fuite tout en étant raisonnablement courte pour permettre une détection utile. Par exemple, la durée séparant t1 et t2 est comprise entre une et quelques heures.

Une première étape de calcul 921 et une deuxième étape de calcul 922 sont réalisées après les première et deuxième étapes d'acquisition de données 911 et 912. La première étape de calcul 921 utilise les mesures de débit de gaz injecté ou extrait entre les instants t1 et t2 par les conduits d'injection 21 et d'extraction 23 lors de la première étape d'acquisition de données 911 pour déterminer une première variation de masse de gaz inerte $\Delta M1$. Cette première variation de masse de gaz inerte $\Delta M1$ est la résultante des masses totales de gaz inerte ajoutées par le conduit d'injection 21 et enlevées par le conduit d'extraction 23 entre le premier instant t1 et le deuxième instant t2.

La deuxième étape de calcul 922 utilise les mesures de pression et de température propres à l'espace d'isolation primaire pour les instants t1 et t2 récupérées lors de la deuxième étape d'acquisition de données 912 pour déterminer une deuxième variation de masse de gaz inerte $\Delta M2$. Cette deuxième variation de masse de gaz inerte $\Delta M2$ est obtenue par la détermination d'une première masse de gaz inerte contenue dans l'espace d'isolation primaire 16 au premier instant t1, par la détermination d'une deuxième masse de gaz inerte contenue dans l'espace d'isolation primaire 16 au deuxième instant t2 en utilisant une des méthodes de calcul exposée précédemment, puis et calculant la différence entre la deuxième masse de gaz et la première masse de gaz, soit

$$[\text{Math 3}] \quad \Delta M2 = masse(t2) - masse(t1).$$

Une première étape de comparaison 931 sert à calculer un premier écart E1 entre la première variation de masse de gaz inerte ΔM1 et la deuxième variation de masse de gaz inerte ΔM2 et à comparer ce premier écart E1 à un premier seuil S1. Typiquement, le premier écart E1 est une simple différence entre les première et deuxième variations de masse de gaz inerte ΔM1 et ΔM2. Le premier écart E1 est représentatif d'une différence entre deux modes de mesures d'une même variation. Si l'espace d'isolation primaire est intègre, autrement dit s'il n'a pas de fuite, ce premier écart devrait être sensiblement nul. Cependant, des erreurs de mesures et de calculs peuvent faire apparaître une légère différence. Aussi, le premier seuil S1 est déterminé pour correspondre à une erreur maximale dépendant de la chaine de mesure. La comparaison du premier écart E1 au premier seuil S1 se fait en valeur absolue. Si le premier écart E1 est supérieur au premier seuil S1 cela veut dire qu'une fuite est possible et l'on réalise la première étape d'alarme 941. Au contraire, si le premier écart E1 n'est pas supérieur au premier seuil S1 cela veut dire qu'il n'y a apparemment pas de fuite, le premier écart E1 est mémorisé pour la suite du procédé. La première boucle se termine pour recommencer, par mesure de redondance, à des troisième et quatrième instants t3 et t4 correspondant à des instants t1 et t2 incrémentés d'une durée de confirmation.

La première étape d'alarme 941 sert à avertir que le premier écart E1 est trop important, ainsi une alarme visuelle ou sonore peut être déclenchée ponctuellement pour attirer l'attention sur cette mesure d'écart. Cependant, même si le premier écart E1 est trop important, il existe des cas où cet écart peut être causé par certaines conditions de mesure plutôt que par une fuite. C'est le cas notamment lors de phase transitoire avec une température qui peut changer localement de manière rapide et importante alors que les conditions de mesures et de calculs considèrent un équilibre de température dans les matériaux. Il convient donc de ne pas conclure de manière immédiate à une fuite mais de mémoriser une alarme A avec le premier écart E1 et les instants t1 et t2 en vue d'une réutilisation ultérieure. D'autres vérifications permettront de caractériser une fuite, notamment les étapes de test 950 et 960 réalisées par la suite. Selon une variante, on vérifie dans la mémoire si une alarme A a déjà été mémorisée une ou plusieurs fois avec un premier écart E1 trop important avant de déclencher une alarme visuelle ou sonore.

La deuxième boucle est identique à la première boucle mais elle est réalisée pour l'espace d'isolation secondaire. Une troisième étape d'acquisition de données 913 est similaire à la première étape d'acquisition de données 911 mais pour les mesures de débit de gaz injecté ou extrait par les conduits d'injection 22 et d'extraction 24 entre les instants t1 et t2. Une quatrième étape d'acquisition de données 914 est similaire à la deuxième étape d'acquisition de données 912 mais pour les mesures de pression et de température propres à l'espace d'isolation secondaire aux instants t1 et t2. Une troisième étape de calcul 923 est similaire à la première étape de calcul 921 et elle calcule une troisième variation de de masse de gaz inerte ΔM3 qui est la résultante des masses totales de gaz inerte ajoutées par le conduit d'injection 22 et enlevées par le conduit d'extraction 24 entre le premier instant t1 et le deuxième instant t2. Une quatrième étape de calcul 924 est similaire à la première étape de calcul 922 mais pour calculer une quatrième variation de masse de gaz inerte ΔM4 qui est obtenue par la détermination d'une troisième masse de gaz inerte contenue dans l'espace d'isolation secondaire 17 au premier instant t1, par la détermination d'une quatrième masse de gaz inerte contenue dans l'espace d'isolation secondaire 17 au deuxième instant t2, puis par le calcul de la différence entre la quatrième masse de gaz et la troisième masse de gaz, soit

$$[\text{Math 4}]\ \Delta M4 = masse(t2) - masse(t1).$$

Une deuxième étape de comparaison 932 est similaire à la première étape de comparaison 931 mais pour calculer un deuxième écart E2 entre la troisième variation de masse de gaz inerte ΔM3 et la quatrième variation de masse de gaz inerte ΔM4 et pour comparer ce deuxième écart E2 à un deuxième seuil S2. Typiquement, le deuxième écart E2 est la différence entre les troisième et quatrième variations de masse de gaz inerte ΔM3 et ΔM4. Le deuxième écart E2 est représentatif d'une différence entre deux modes de mesures d'une même variation et est représentatif de l'intégrité de l'espace d'isolation secondaire 17. Le deuxième seuil S2 est déterminé pour correspondre à une erreur de mesure maximale. La comparaison du deuxième écart E2 au deuxième seuil S2 se fait en valeur absolue. Si le deuxième écart E2 est supérieur au deuxième seuil S2 cela veut dire qu'une fuite est possible et l'on réalise la deuxième étape d'alarme 942. Si le deuxième écart E2 n'est pas supérieur au deuxième seuil S2 cela veut dire qu'il n'y a apparemment pas de fuite, le deuxième écart E2 est mémorisé pour la suite du procédé. La deuxième boucle se termine pour recommencer à des troisième et quatrième instants t3 et t4 correspondant à des instants t1 et t2 incrémentés de la durée de confirmation.

La deuxième étape d'alarme 942 est similaire à la première étape d'alarme 941 mais en relation avec le deuxième écart E2. Une alarme A est mémorisée avec le deuxième écart E2 et les instants t1 et t2 en vue d'une réutilisation ultérieure. Les étapes de test 950 et 960 sont réalisées ensuite. Selon une variante, on vérifie dans la mémoire si une alarme A a déjà été mémorisée une ou plusieurs fois avec un deuxième écart E2 trop important avant de déclencher une alarme visuelle ou sonore.

Une étape de test 950 est une étape de vérification d'une possible détection de fuite dès lors que le premier écart E1 ou le deuxième écart E2 ou les premier et deuxième écarts E1 et E2 sont trop importants. Au cours de cette étape, on compare le premier écart E1 avec le deuxième écart E2 pour vérifier si la variation de ces écarts E1 et E2 se compense. En d'autres termes, si l'un écart E1 ou E2 montre une perte de gaz sur l'un des espaces d'isolation 16 ou 17 et que l'autre écart E2 ou E1 montre une augmentation de gaz sur l'autre des espaces d'isolation 17 ou 16 alors il est probable qu'une fuite existe entre les deux espaces et que cette fuite est localisée sur la membrane d'étanchéité secondaire 14. Pour réaliser le test, la somme algébrique des premier et deuxième écarts E1 et E2 est réalisée. En cas de fuite dans la membrane secondaire, le premier écart E1 devrait être l'opposé du deuxième écart E2 et donc leur somme devrait être nulle. Une comparaison de la somme en valeur absolue avec un troisième seuil S3 est réalisée. Si la somme est supérieure au seuil S3 alors on considère que le test n'est pas pertinent et on peut attendre au moins une durée de confirmation pour recommencer le procédé aux instants t3 et t4. Si, au contraire, la somme est inférieure au troisième seuil S3 alors il convient de réaliser une étape d'alarme 970.

L'étape d'alarme 970 mémorise une alarme A avec la mention F4 en vue d'une vérification ultérieure. La mention F4 comprend l'identification d'une fuite probable sur la membrane d'étanchéité secondaire ainsi que les instants t1 et t2. En outre, une alarme visuelle ou sonore peut être déclenchée pour avertir l'équipage d'une fuite sur la membrane d'étanchéité secondaire. L'alarme visuelle ou sonore peut être déclenchée uniquement s'il s'agit d'une deuxième alarme enregistrée avec la mention F4. A l'issue de cette étape d'alarme 970, on attend au moins une durée de confirmation pour recommencer le procédé aux instants t3 et t4.

Une étape de test 960 est une étape de vérification d'une possible détection de fuite dès lors que le premier écart E1 ou le deuxième écart E2 ou les premier et deuxième écarts E1 et E2 sont trop importants. Au cours de cette étape, on compare le premier écart E1 avec le deuxième écart E2 pour vérifier si ces écarts E1 et E2 sont sensiblement égaux ou non. Si ces écarts E1 et E2 sont sensiblement égaux, soit il y a deux fuites identiques dans deux parois distinctes, ce qui est peu probable, soit on se trouve dans une situation de mesure qui crée une erreur systématique. Cela correspond par exemple à une phase transitoire pour laquelle les mesures sont bien plus erronées qu'elles ne le devraient. Si par contre les premier et deuxième écarts E1 t E2 ne sont pas égaux, cela renforce une probabilité de détection d'une fuite. Une différence algébrique entre les premier et deuxième écarts E1 et E2 est calculée. Puis, cette différence est comparée en valeur absolue à un quatrième seuil S4. Si la différence n'est pas supérieure au quatrième seuil S4, les premier et deuxième écarts E1 et E2 sont sensiblement égaux et le mieux est d'attendre au moins une durée de confirmation pour recommencer le procédé aux instants t3 et t4. Si, au contraire, la différence est supérieure au quatrième seuil S4, alors il convient de réaliser une étape d'alarme 980.

L'étape d'alarme 980 mémorise une alarme A avec la mention F3 en vue d'une vérification ultérieure. La mention F3 comprend l'identification de la différence d'écart E1 et E2 supérieure au quatrième seuil ainsi que les instants t1 et t2. En outre, une alarme visuelle ou sonore peut être déclenchée pour avertir l'équipage d'une fuite potentielle. L'alarme visuelle ou sonore peut être déclenchée uniquement s'il s'agit d'une deuxième alarme enregistrée avec la mention F3. A l'issue de cette troisième étape d'alarme 980, on attend au moins une durée de confirmation pour recommencer le procédé aux instants t3 et t4.

Sur la figure 9, les étapes d'acquisition de données 911 à 914 sont réalisées en parallèle et suivies des étapes de calcul 921 à 924. Or, ces étapes peuvent être réalisées séquentiellement dans un ordre quelconque dès lors que les mesures effectuées dans les étapes d'acquisition soit bien réalisées aux mêmes instants t1 et t2 et que la première étape de calcul 921 soit réalisée après la première étape d'acquisition 911, que la deuxième étape de calcul 922 soit réalisée après la deuxième étape d'acquisition 912, que la troisième étape de calcul 923 soit réalisée après la troisième étape d'acquisition 913, et que la quatrième étape de calcul 924 soit réalisée après la quatrième étape d'acquisition 914.

Également, les étapes de comparaison 931 et 932 et les étape l'alarme 941 et 942 peuvent être réalisées de manière plus séquentielle. L'important étant de calculer les premier et deuxième écarts E1 et E2, de mémoriser une alarme A avec la valeur du premier écart E1 si le premier écart E1 est supérieur au premier seuil S1, et/ou de mémoriser une alarme A avec la valeur du deuxième écart E2 si le deuxième écart E2 est supérieur au deuxième seuil S2.

Les étapes de test 950 et 960 et les étapes d'alarme 970 et 980 peuvent être réalisées en parallèle ou séquentiellement. Dans certains cas, l'étape de test 950 ou 960 peut être omise.

Confirmation de fuite.

Comme indiqué précédemment, le procédé permet de détecter une probabilité de fuite et de lever une alarme. Comme indiqué précédemment, une cause de fausse détection peut être liée à un régime transitoire de température. A titre indicatif, lors du remplissage d'une cuve 2, la température de la membrane d'étanchéité primaire 15 peut varier de 80 °C et même de plus de 160°C si la cuve avait été vidangée au préalable. Une telle variation de température se propage au travers de l'espace d'isolation primaire 16 puis au travers de l'espace d'isolation secondaire 17 pour arriver à une situation d'équilibre thermique correspondant à une répartition de température linéaire dans chaque matériau. La particularité des espaces d'isolation 16 et 17 est d'être isolant thermiquement ce qui correspond à une résistance thermique élevée et donc à une propagation lente des variations de température. Ainsi, des mesures réalisées pendant ou après une variation de température importante peuvent se voir entacher d'une erreur liée au régime transitoire de changement de température. Cette erreur liée au régime transitoire peut être source de fausse alarme.

Un moyen pour s'affranchir du régime transitoire est d'augmenter fortement le nombre de capteurs de température et de réduire la détermination de température par calcul. Un inconvénient majeur est que, pour s'affranchir totalement de cette erreur transitoire, le nombre de capteurs doit être tellement important que le coût d'équipement serait inacceptable. Par conséquent, il convient de remédier différemment à ce type d'erreur.

La variation de température liée au remplissage d'une cuve est relativement importante. Une première possibilité est d'attendre une durée de stabilisation, par exemple deux jours, après le remplissage de la cuve avant de considérer les alarmes.

En outre en dehors du remplissage de la cuve, il peut y avoir des conditions qui provoquent des variations de température importantes telles que le transvasement partiel de gaz liquéfié entre deux cuves du navire ou encore une variation de température extérieure de plusieurs dizaines de degrés en quelques heures. De telles conditions peuvent fausser les mesures pendant des durées de quelques heures.

Aussi il est préféré de confirmer les alarmes de manière automatique par la répétition redondante du procédé après l'écoulement d'une durée de confirmation. Le procédé est donc répété à des instants t3 et t4 correspondants aux instants t1 et t2 incrémentés de la durée de confirmation. La durée de confirmation peut être égale ou supérieure à la durée séparant t1 et t2. En outre, chaque fois qu'une alarme A est enregistrée, les conditions d'alarme et les instants correspondant aux instants d'alarme sont enregistrés. Ainsi, le dispositif de détection de fuite peut de lui-même contrôler si une alarme se répète et ne déclencher une alarme visuelle ou sonore que s'il y a répétition de ladite alarme. Le nombre de fois où une alarme se répète avant de déclencher une alarme visuelle ou sonore peut être configurée dans le système, par exemple en fonction du type d'alarme. Les alarmes liées simplement à un écart E1 ou E2 trop important peuvent nécessiter plus de répétitions que les alarmes F3 ou F4 pour lesquelles un deuxième critère est pris en compte.

Bien entendu, en cas de déclenchement d'alarme visuelle ou sonore il convient d'avoir une confirmation humaine de l'alarme. Notamment, il est possible de changer certains paramètres pour confirmer ou infirmer l'alarme. A titre indicatif, certains choix de durées peuvent en eux-mêmes être la cause de fausse alarme si la durée de confirmation est par exemple d'un jour et que la durée entre t1 et t2 correspond au créneau 9h00-12h00 en heure solaire sous une latitude de forte chaleur cela va correspondre à une mesure effectuée en régime transitoire. Pour confirmer une fuite, l'équipage peut agir sur la durée séparant t1 et t2 et sur la durée de confirmation pour vérifier si la fuite est confirmée avec un changement de conditions de mesure.

En outre, une analyse des alarmes enregistrées permet également d'infirmer une fuite ou de la localiser. Les espaces d'isolation 16 et 17 sont en légère surpression ou dépression par rapport à la pression atmosphérique et par rapport à la pression de la cuve. En outre, si la pression entre les deux espaces d'isolation est différente, et s'il y a une fuite, cette fuite est nécessairement dirigée dans une certaine direction allant de la pression la plus élevée vers la pression la plus basse. Les premier et deuxième écarts E1 et E2 indiquent si du gaz s'échappe ou si du gaz arrive dans l'espace d'isolation considéré en dehors des conduits d'injection et d'extraction, ce qui correspond également une direction de fuite. Si les constatations de direction sur les premier et deuxième écarts E1 et E2 sont incompatibles avec la direction possible des gaz, les alarmes sont de fausses alarmes. A contrario, si les constatations sur les premier et deuxième écarts E1 et E2 sont conformes avec la direction possible des gaz, les alarmes peuvent être confirmées.

Ainsi, après de multiples confirmations des alarmes, il devient possible de déterminer une forte probabilité de fuite ainsi que la paroi dans laquelle se trouve la fuite. En effet, si l'alarme F3 et l'alarme F4 sont confirmées de manière multiple, la fuite est sur la membrane d'étanchéité secondaire. Si l'alarme F3 est confirmée avec l'écart E1 et que l'alarme F4 n'est pas confirmée, alors la fuite est dans la membrane d'étanchéité primaire. Si l'alarme F3 est confirmée avec l'écart E2 et que l'alarme F4 n'est pas confirmée, alors la fuite est dans la membrane d'étanchéité secondaire.

En outre, les navires de transport de gaz peuvent disposer de détecteurs de type de gaz dans la cuve et dans chaque espace d'isolation afin de détecter la présence d'un gaz qui ne doit pas y être. La détection d'oxygène ou la présence d'eau dans l'espace secondaire indique une fuite sur la paroi interne de la coque. La détection d'un hydrocarbure de type méthane, éthane, butane ou propane dans l'espace primaire ou une détection d'azote dans la cuve de gaz liquéfié indique une fuite de la membrane d'étanchéité primaire. L'utilisation de ces différents moyens de détection permet d'avoir une redondance de confirmation de fuite.

Autres variantes

L'invention a été décrite par rapport à une cuve à double membrane en réalisant un calcul de variation de masse de gaz selon deux méthodes différentes pour obtenir deux écarts E1 et E2 propre à chacun des espaces. Bien qu'il soit particulièrement avantageux d'utiliser un tel dispositif avec une cuve à double membrane, en particulier pour détecter une fuite au niveau de la membrane d'étanchéité secondaire, il est possible d'utiliser un système simplifié pour ne détecter les fuites que dans un seul espace d'isolation.

Pour une cuve à double membrane, comme indiqué précédemment, une détection de fuite par présence de gaz étranger peut se faire dans les espaces d'isolation 16 et 17 et dans la cuve 2. L'utilisation d'une mesure de variation sur un seul des espaces d'isolation peut être suffisante si l'on souhaite uniquement détecter une fuite sur la membrane d'étanchéité secondaire en combinaison avec d'autres moyens de détection de fuite sans rajouter de redondance de détection. Ainsi, un seul écart E1 ou E2 sera mesuré et les étapes de test 950 et 960 et les étapes d'alarme 970 et 980 ne seront pas réalisées. Une confirmation multiple de l'écart E1 ou E2 permet en effet de déterminer une forte probabilité de fuite sur l'espace d'isolation sur lequel la mesure est effectuée. Si les autres moyens de détection de fuite n'indiquent pas de fuite alors la fuite ne peut qu'être sur la membrane d'étanchéité secondaire. L'utilisation de la double détection de variation de masse sur un seul espace permet d'améliorer la détection de fuite sur la membrane d'étanchéité secondaire ce qui peut être considéré suffisant si l'on ne souhaite pas faire de système redondant.

Selon une autre variante, on peut appliquer l'invention sur une cuve ne disposant que d'un seul espace d'isolation, tel que par exemple une cuve de gaz de pétrole liquéfié (GPL). Dans ce cas, un seul écart peut être calculé. Un tel système peut être utilisé seul ou en redondance avec un autre dispositif de détection de fuite.

La description fait référence à un navire de transport, disposant de plusieurs cuves. Le dispositif de détection de fuite 80 peut être multiplié par le nombre de cuves ou, au choix, un seul dispositif de détection de fuite peut être utilisé avec une pluralité de cuves munies des capteurs nécessaires pour mettre en oeuvre le procédé sur chaque cuve. Dans ce dernier cas, le dispositif de détection de fuite mettra en oeuvre l'algorithme de détection de fuite autant de fois qu'il y a de cuve.

En outre, l'invention n'est pas limitée aux navires de transport. En effet, elle s'applique à tout type d'installation de stockage de gaz liquéfié comportant une ou plusieurs cuves. Les cuves de l'installation peuvent être des cuves qui disposent d'un ou deux espaces d'isolation. Le dispositif de détection de fuite peut être placé à distance dans un local de supervision des cuves qui n'est pas nécessairement le poste de pilotage d'un navire.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention, lequel est défini par les revendications.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

**Revendications**

1. Procédé de détection de fuite sur une cuve étanche et thermiquement isolante (2) pour gaz liquéfié, ladite cuve comportant une membrane d'étanchéité (14, 15) entourant le gaz liquéfié, la membrane d'étanchéité étant entourée d'un espace d'isolation (16, 17) séparant la membrane d'étanchéité d'une paroi de support (11) elle-même étanche, l'espace d'isolation étant rempli de matériaux solides thermiquement isolants et d'un gaz inerte, l'espace d'isolation étant muni d'au moins un conduit d'injection (21, 22) et d'au moins un conduit d'extraction (23, 24) pour injecter et extraire le gaz inerte, le procédé de détection comportant l'étape de :

   déterminer (921, 923) une première variation de masse de gaz inerte ($\Delta M1$, $\Delta M3$) entre un premier instant (t1) et un deuxième instant (t2), la première variation correspondant à la résultante des masses totales de gaz inerte ajoutées par le conduit d'injection et enlevées par le conduit d'extraction entre le premier instant et le deuxième instant,
   le procédé de détection étant **caractérisé en ce qu'**il comporte en outre les étapes suivantes :

   déterminer une première masse de gaz inerte dans l'espace d'isolation au premier instant et une deuxième masse de gaz inerte dans l'espace d'isolation au deuxième instant au moyen de mesures de la pression et de la température dans un volume libre de l'espace d'isolation,
   calculer (922, 924) une deuxième variation de masse de gaz inerte ($\Delta M2$, $\Delta M4$) entre le premier instant et le deuxième instant correspondant à la différence entre la deuxième masse et la première masse de gaz inerte, et
   comparer (931, 932) la première variation de masse de gaz inerte avec la deuxième variation de masse de gaz inerte et déclencher une alarme si un écart (E1, E2) entre la première variation et la deuxième variation de masse de gaz inerte est supérieure à un premier seuil (S1).

**2.** Procédé selon la revendication 1, dans lequel la membrane d'étanchéité est une membrane d'étanchéité secondaire (14), dans lequel l'espace d'isolation est un espace d'isolation secondaire (17) et dans lequel la cuve comporte une membrane d'étanchéité primaire située entre la membrane d'étanchéité secondaire et le gaz liquéfié, la membrane d'étanchéité secondaire et la membrane d'étanchéité primaire étant séparée par un espace d'isolation primaire rempli de matériaux solides thermiquement isolants et du gaz inerte.

**3.** Procédé selon la revendication 1, dans lequel la membrane d'étanchéité est une membrane d'étanchéité primaire (15), dans lequel l'espace d'isolation est un espace d'isolation primaire (16), dans lequel l'écart est un écart primaire (E1) et dans lequel la cuve comporte une membrane d'étanchéité secondaire (14) située entre la membrane d'étanchéité primaire (15) et la paroi de support (11), la membrane d'étanchéité primaire et la membrane d'étanchéité secondaire étant séparées par l'espace d'isolation primaire (16), la membrane d'étanchéité secondaire et la paroi extérieure étant séparées par un espace d'isolation secondaire (17) rempli de matériaux solides thermiquement isolants et du gaz inerte.

**4.** Procédé selon la revendication 3, l'espace d'isolation secondaire (17) étant muni d'au moins un conduit d'injection (22) et d'au moins un conduit d'extraction (24) pour injecter et extraire le gaz inerte, dans lequel le procédé de détection comporte en outre les étapes suivantes :

déterminer (923) une troisième variation de masse de gaz inerte ($\Delta M3$) dans l'espace d'isolation secondaire entre le premier instant (t1) et le deuxième instant (t2), la troisième variation correspondant à la résultante des masses totales de gaz inerte ajoutées par le conduit d'injection et enlevées par le conduit d'extraction entre le premier instant et le deuxième instant,
déterminer une troisième masse de gaz inerte dans l'espace d'isolation secondaire au premier instant et une quatrième masse de gaz inerte dans l'espace d'isolation secondaire au deuxième instant au moyen de mesures de la pression et de la température dans un volume libre de l'espace d'isolation secondaire,
calculer (924) une quatrième variation de masse de gaz inerte ($\Delta M4$) dans l'espace d'isolation secondaire entre le premier instant et le deuxième instant correspondant à la différence entre la quatrième masse et la troisième masse de gaz inerte, et
comparer (932) la troisième variation de masse de gaz inerte ($\Delta M3$) avec la quatrième variation de masse de gaz inerte ($\Delta M4$) et déclencher une alarme si un écart secondaire (E2) entre la troisième variation et la quatrième variation de masse de gaz inerte est supérieure à un deuxième seuil (S2).

**5.** Procédé selon la revendication 4, dans lequel, si l'écart primaire (E1) est supérieur au premier seuil (S1) et/ou si l'écart secondaire (E2) est supérieur au deuxième seuil (S2), et si la somme algébrique de l'écart primaire (E1) et de l'écart secondaire (E2) est inférieure à un troisième seuil (S3), on détermine la présence d'une fuite dans la membrane d'étanchéité secondaire (14).

**6.** Procédé selon la revendication 4 ou 5, dans lequel, si l'écart primaire (E1) est supérieur au premier seuil (S1) et/ou si l'écart secondaire (E2) est supérieur au deuxième seuil (S2), et si la différence entre l'écart primaire (E1) et l'écart secondaire (E2) est supérieure à un quatrième seuil (S4), on détermine la présence d'une fuite dans au moins l'un des espaces d'isolation primaire (16) et secondaire (17)

**7.** Procédé selon l'une des revendications précédentes, dans lequel on réitère les étapes précédentes entre un troisième instant (t3) correspondant au premier instant (t1) incrémenté d'une durée de confirmation et un quatrième instant (t4) correspondant au deuxième instant (t2) incrémenté de la durée de confirmation, et dans lequel on détermine la présence d'une fuite si ladite alarme est déclenchée à nouveau après l'écoulement de la durée de confirmation.

**8.** Procédé selon l'une des revendications précédentes qui est effectué après une durée supérieure à une durée de stabilisation prédéterminée après un remplissage de la cuve.

**9.** Procédé selon l'une des revendications précédentes, dans lequel les mesures de la pression et de la température sont réalisées pendant une durée de mesure autour du premier instant et autour du deuxième instant, la première masse et la deuxième masse étant des masses moyennes sur la durée de mesure.

**10.** Procédé selon la revendication 9 dans lequel la durée de mesure est suffisamment courte pour que le gaz inerte ajouté ou extrait pendant la durée de mesure soit négligeable au vu de la masse totale de gaz inerte présent dans l'espace d'isolation.

**11.** Procédé selon la revendication 9, dans lequel aucun gaz inerte n'est ajouté dans ou extrait de l'espace d'isolation pendant la durée de mesure.

**12.** Procédé selon la revendication 9, dans lequel la durée de mesure est inférieure à la durée séparant le premier instant et le deuxième instant.

**13.** Procédé selon l'une des revendications précédentes dans lequel les mesures de température comportent des mesures réalisées à l'aides de capteurs de températures (111, 114) placés à une pluralité d'endroits sur la paroi de support (11) et sur la membrane d'étanchéité secondaire (14).

**14.** Procédé selon l'une des revendications précédentes dans lequel les mesures de température comportent des estimations calculées à partir de la température du gaz liquéfié et du niveau de gaz liquéfié dans la cuve.

**15.** Procédé selon l'une des revendications précédentes dans lequel la première variation de masse de gaz inerte ($\Delta M1$) est mesurée en fonction d'un débit massique de gaz inerte au niveau d'une vanne d'injection (25) du conduit d'injection (21) et d'une vanne d'extraction (27) du conduit d'extraction (23).

**16.** Procédé selon la revendication 15, dans lequel le débit massique au niveau de la vanne d'injection (25) et/ou de la vanne d'extraction (27) est déterminé en fonction d'un degré d'ouverture de ladite vanne.

**17.** Procédé selon la revendication 15 ou 16, dans lequel, le débit massique de gaz au niveau de la vanne d'injection (25) et/ou de la vanne d'extraction (27) est déterminé en fonction de la pression et de la température du gaz inerte en amont et en aval de ladite vanne.

**18.** Procédé selon la revendication 15, dans lequel le débit massique au niveau de la vanne d'injection (25) et/ou de la vanne d'extraction (27) est mesuré par un débitmètre (325, 327) mesurant la masse de gaz au niveau de ladite vanne.

**19.** Procédé selon l'une des revendications précédentes dans lequel, les mesures de la pression et de la température pour déterminer la première ou deuxième masse de gaz inerte dans l'espace d'isolation, sont réalisées dans une pluralité de zones de l'espace d'isolation, l'ensemble des zones formant le volume libre de l'espace d'isolation.

**20.** Installation de stockage de gaz liquéfié comportant une cuve étanche et thermiquement isolante (2) qui comporte une membrane d'étanchéité (14, 15) entourant le gaz liquéfié, la membrane d'étanchéité étant entourée d'un espace d'isolation (16, 17) séparant la membrane d'étanchéité d'une paroi de support (11) elle-même étanche, l'espace d'isolation étant rempli de matériaux solides thermiquement isolants et d'un gaz inerte, l'espace d'isolation étant muni d'au moins un conduit d'injection (21, 22) et d'au moins un conduit d'extraction (23, 24) pour injecter et extraire le gaz inerte, dans laquelle la cuve comporte au moins un capteur de pression (221 à 224) et une pluralité de capteurs de température (111, 114, 130) configurés pour déterminer la pression et la température du gaz inerte enfermé dans un volume libre l'espace d'isolation, dans laquelle l'installation comporte des dispositifs de mesure de débit (121 à 128, 221 à 228, 325 à 328) pour mesurer un débit de gaz inerte dans le conduit d'injection (21, 22) et dans le conduit d'extraction (23, 24), et au moins un dispositif de détection de fuite (80), le au moins un dispositif de détection de fuite (80) étant configuré pour :

déterminer avec les dispositifs de mesure de débit (121 à 128, 221 à 228, 325 à 328) une première variation de masse de gaz inerte ($\Delta M1$, $\Delta M3$) entre un premier instant (t1) et un deuxième instant (t2), la première variation correspondant à la résultante des masses totales de gaz inerte ajoutées par le conduit d'injection et enlevées par le conduit d'extraction entre le premier instant et le deuxième instant,
l'installation étant **caractérisée en ce que** le dispositif de détection de fuite (80) est en outre configuré pour :

déterminer une première masse de gaz inerte dans l'espace d'isolation au premier instant et une deuxième masse de gaz inerte dans l'espace d'isolation au deuxième instant au moyen de mesures de la pression et de la température réalisées par le au moins un capteur de pression (221 à 224) et la pluralité de capteurs de température (111, 114, 130) dans un volume libre de l'espace d'isolation,
calculer une deuxième variation de masse de gaz inerte ($\Delta M2$, $\Delta M4$) entre le premier instant et le deuxième instant correspondant à la différence entre la deuxième masse et la première masse de gaz inerte, et
comparer la première variation de masse de gaz inerte avec la deuxième variation de masse de gaz inerte et déclencher une alarme si un écart (E1, E2) entre la première variation et la deuxième variation de masse de gaz inerte est supérieure à un premier seuil (S1).

21. Installation de stockage de gaz liquéfié selon la revendication précédente, dans laquelle la membrane d'étanchéité est une membrane d'étanchéité secondaire (14), dans lequel l'espace d'isolation est un espace d'isolation secondaire (17) et dans lequel la cuve comporte une membrane d'étanchéité primaire (15) située entre la membrane d'étanchéité secondaire (14) et le gaz liquéfié, la membrane d'étanchéité secondaire (14) et la membrane d'étanchéité primaire (15) étant séparées par un espace d'isolation primaire (16) rempli de matériaux solides thermiquement isolants et d'un gaz inerte.

22. Installation de stockage de gaz liquéfié selon la revendication 20, dans laquelle la membrane d'étanchéité est une membrane d'étanchéité primaire (15), dans lequel l'espace d'isolation est un espace d'isolation primaire (16), dans lequel l'écart est un écart primaire (E1) et dans lequel la cuve comporte une membrane d'étanchéité secondaire (14) située entre la membrane d'étanchéité primaire (15) et la paroi de support (11), la membrane d'étanchéité primaire (15) et la membrane d'étanchéité secondaire (14) étant séparées par l'espace d'isolation primaire (16), la membrane d'étanchéité secondaire (14) et la paroi de support (11) étant séparées par un espace d'isolation secondaire (17) rempli de matériaux solides thermiquement isolants et d'un gaz inerte.

23. Installation de stockage de gaz liquéfié selon la revendication précédente, l'espace d'isolation secondaire étant muni d'au moins un conduit d'injection (22) et d'au moins un conduit d'extraction (24) pour injecter et extraire le gaz inerte, laquelle la cuve comporte au moins un capteur de pression (222, 224), dans laquelle des capteurs (111, 114) de la pluralité de capteurs de température sont également configurés pour déterminer la température du gaz inerte enfermé dans l'espace d'isolation secondaire (17), dans laquelle l'installation comporte des dispositifs de mesure de débit (122, 124, 126, 128, 222, 224, 226, 228, 326, 328) pour mesurer un débit de gaz inerte dans le conduit d'injection (22) et dans le conduit d'extraction (24), et dans laquelle le dispositif de détection de fuite (80) est configuré pour mettre en oeuvre le procédé selon l'une des revendications 4 à 19.

24. Navire de transport de gaz liquéfié **caractérisé en ce qu'**il comporte une ou plusieurs installations de stockage de gaz liquéfié selon l'une des revendications 20 à 23.


**Patentansprüche**

1. Verfahren zur Erkennung eines Lecks in einem dichten und thermisch isolierenden Tank (2) für Flüssiggas, wobei der Tank eine Dichtungsmembran (14, 15) aufweist, die das Flüssiggas umgibt, wobei die Dichtungsmembran von einem Isolierraum (16, 17) umgeben ist, der die Dichtungsmembran von einer Stützwand (11) trennt, die ihrerseits dicht ist, wobei der Isolierraum mit thermisch isolierenden Feststoffen und einem Inertgas gefüllt ist, wobei der Isolierraum mit mindestens einer Einspritzleitung (21, 22) und mindestens einer Abzugsleitung (23, 24) zum Einspritzen bzw. Abziehen des Inertgases versehen ist, wobei das Erkennungsverfahren folgenden Schritt umfasst:

Bestimmen (921, 923) einer ersten Inertgasmassenänderung ($\Delta$M1, $\Delta$M3) zwischen einem ersten Zeitpunkt (t1) und einem zweiten Zeitpunkt (t2), wobei die erste Änderung der Resultierenden der Inertgasgesamtmassen, die zwischen dem ersten Zeitpunkt und dem zweiten Zeitpunkt durch die Einspritzleitung zugeführt bzw. durch die Abzugsleitung abgeführt wurden, entspricht,
wobei das Erkennungsverfahren **dadurch gekennzeichnet ist, dass** es ferner die folgenden Schritte umfasst:

Bestimmen einer ersten Inertgasmasse im Isolierraum zum ersten Zeitpunkt und einer zweiten Inertgasmasse im Isolierraum zum zweiten Zeitpunkt anhand von Druck- und Temperaturmessungen in einem freien Volumen des Isolierraums,
Berechnen (922, 924) einer zweiten Inertgasmassenänderung (AM2, $\Delta$M4) zwischen dem ersten Zeitpunkt und dem zweiten Zeitpunkt, die der Differenz zwischen der zweiten und der ersten Inertgasmasse entspricht, und
Vergleichen (931, 932) der ersten Inertgasmassenänderung mit der zweiten Inertgasmassenänderung und Auslösen eines Alarms, wenn eine Abweichung (E1, E2) zwischen der ersten und der zweiten Inertgasmassenänderung über einem ersten Schwellenwert (S1) liegt.

2. Verfahren nach Anspruch 1, wobei es sich bei der Dichtungsmembran um eine sekundäre Dichtungsmembran (14) handelt, wobei es sich bei dem Isolierraum um einen sekundären Isolierraum (17) handelt und wobei der Tank eine primäre Dichtungsmembran umfasst, die sich zwischen der sekundären Dichtungsmembran und dem Flüssiggas befindet, wobei die sekundäre Dichtungsmembran und die primäre Dichtungsmembran durch einen primären Isolierraum, der mit thermisch isolierenden Feststoffen und Inertgas gefüllt ist, voneinander getrennt sind.

3. Verfahren nach Anspruch 1, wobei es sich bei der Dichtungsmembran um eine primäre Dichtungsmembran (15) handelt, wobei es sich bei dem Isolierraum um einen primären Isolierraum (16) handelt, wobei es sich bei der Abweichung um eine primäre Abweichung (E1) handelt und wobei der Tank eine sekundäre Dichtungsmembran (14) umfasst, die sich zwischen der primären Dichtungsmembran (15) und der Stützwand (11) befindet, wobei die primäre Dichtungsmembran und die sekundäre Dichtungsmembran durch den primären Isolierraum (16) voneinander getrennt sind, wobei die sekundäre Dichtungsmembran und die Außenwand durch einen sekundären Isolierraum (17), der mit thermisch isolierenden Feststoffen und Inertgas gefüllt ist, voneinander getrennt sind.

4. Verfahren nach Anspruch 3, wobei der sekundäre Isolierraum (17) mit mindestens einer Einspritzleitung (22) und mindestens einer Abzugsleitung (24) zum Einspritzen bzw. Abziehen des Inertgases versehen ist, wobei das Erkennungsverfahren ferner die folgenden Schritte umfasst:

Bestimmen (923) einer dritten Inertgasmassenänderung (∆M3) im sekundären Isolierraum zwischen dem ersten Zeitpunkt (t1) und dem zweiten Zeitpunkt (t2), wobei die dritte Änderung der Resultierenden der Inertgasgesamtmassen, die zwischen dem ersten Zeitpunkt und dem zweiten Zeitpunkt durch die Einspritzleitung zugeführt bzw. durch die Abzugsleitung abgeführt wurden, entspricht,

Bestimmen einer dritten Inertgasmasse im sekundären Isolierraum zum ersten Zeitpunkt und einer vierten Inertgasmasse im sekundären Isolierraum zum zweiten Zeitpunkt anhand von Druck- und Temperaturmessungen in einem freien Volumen des sekundären Isolierraums,

Berechnen (924) einer vierten Inertgasmassenänderung (∆M4) im sekundären Isolierraum zwischen dem ersten Zeitpunkt und dem zweiten Zeitpunkt,

die der Differenz zwischen der vierten und der dritten Inertgasmasse entspricht, und

Vergleichen (932) der dritten Inertgasmassenänderung (∆M3) mit der vierten Inertgasmassenänderung (∆M4) und Auslösen eines Alarms, wenn eine sekundäre Abweichung (E2) zwischen der dritten und der vierten Inertgasmassenänderung über einem zweiten Schwellenwert (S2) liegt.

5. Verfahren nach Anspruch 4, wobei, wenn die primäre Abweichung (E1) über dem ersten Schwellenwert (S1) liegt und/oder wenn die sekundäre Abweichung (E2) über dem zweiten Schwellenwert (S2) liegt und wenn die algebraische Summe der primären Abweichung (E1) und der sekundären Abweichung (E2) unter einem dritten Schwellenwert (S3) liegt, das Vorhandensein eines Lecks in der sekundären Dichtungsmembran (14) festgestellt wird.

6. Verfahren nach Anspruch 4 oder 5, wobei, wenn die primäre Abweichung (E1) über dem ersten Schwellenwert (S1) liegt und/oder wenn die sekundäre Abweichung (E2) über dem zweiten Schwellenwert (S2) liegt und wenn die Differenz zwischen der primären Abweichung (E1) und der sekundären Abweichung (E2) über einem vierten Schwellenwert (S4) liegt, das Vorhandensein eines Lecks in mindestens einem des primären (16) und des sekundären Isolationsraums (17) festgestellt wird.

7. Verfahren nach einem der vorangehenden Ansprüche, wobei die vorangehenden Schritte zwischen einem dritten Zeitpunkt (t3), der dem um eine Bestätigungsdauer inkrementierten ersten Zeitpunkt (t1) entspricht, und einem vierten Zeitpunkt (t4), der dem um die Bestätigungsdauer inkrementierten zweiten Zeitpunkt (t2) entspricht, wiederholt werden und wobei das Vorhandensein eines Lecks festgestellt wird, wenn der Alarm nach Ablauf der Bestätigungsdauer erneut ausgelöst wird.

8. Verfahren nach einem der vorangehenden Ansprüche, das nach einer Zeitdauer durchgeführt wird, die größer als eine vorbestimmte Stabilisierungsdauer nach einer Befüllung des Tanks ist.

9. Verfahren nach einem der vorangehenden Ansprüche, wobei die Druck- und Temperaturmessungen während einer Messdauer um den ersten Zeitpunkt und um den zweiten Zeitpunkt herum durchgeführt werden, wobei die erste Masse und die zweite Masse über die Messdauer gemittelte Massen sind.

10. Verfahren nach Anspruch 9, wobei die Messdauer so kurz ist, dass das während der Messdauer zugeführte bzw. abgezoene Inerthas im Hinblick auf die Gesamtmasse des im Isolierraum vorhandenen Inertgases vernachlässigbar ist.

11. Verfahren nach Anspruch 9, wobei während der Messdauer kein Inertgas in den Isolierraum zugeführt oder aus dem Isolierraum abgezogen wird.

12. Verfahren nach Anspruch 9, wobei die Messdauer kürzer als die Zeitdauer ist, die den ersten Zeitpunkt und den zweiten Zeitpunkt trennt.

13. Verfahren nach einem der vorangehenden Ansprüche, wobei die Temperaturmessungen Messungen umfassen, die mit Hilfe von Temperatursensoren (111, 114) durchgeführt werden, die an einer Vielzahl von Stellen an der Stützwand (11) und an der sekundären Dichtungsmembran (14) angeordnet sind.

14. Verfahren nach einem der vorangehenden Ansprüche, wobei die Temperaturmessungen Schätzungen umfassen, die anhand der Flüssiggastemperatur und des Flüssiggasfüllstands im Tank berechnet werden.

15. Verfahren nach einem der vorangehenden Ansprüche, wobei die erste Inertgasmassenänderung ($\Delta$M1) in Abhängigkeit von einem Inertgasmassenstrom an einem Einspritzventil (25) der Einspritzleitung (21) und an einem Abzugsventil (27) der Abzugsleitung (23) gemessen wird.

16. Verfahren nach Anspruch 15, wobei der Massenstrom am Einspritzventil (25) und/oder am Abzugsventil (27) in Abhängigkeit von einem Öffnungsgrad des Ventils bestimmt wird.

17. Verfahren nach Anspruch 15 oder 16, wobei der Gasmassenstrom am Einspritzventil (25) und/oder am Abzugsventil (27) in Abhängigkeit vom Intertgasdruck und der Inertgastemperatur stromaufwärts und stromabwärts des Ventils bestimmt wird.

18. Verfahren nach Anspruch 15, wobei der Massenstrom am Einspritzventil (25) und/oder am Abzugsventil (27) durch einen Durchflussmesser (325, 327) gemessen wird, der die Gasmasse am Ventil misst.

19. Verfahren nach einem der vorangehenden Ansprüche, wobei die Druck- und Temperaturmessungen zur Bestimmung der ersten oder zweiten Inertgasmasse im Isolierraum in einer Vielzahl von Isolierraumzonen durchgeführt werden, wobei die Gesamtheit der Zonen das freie Volumen des Isolierraums bildet.

20. Flüssiggasspeicheranlage, umfassend einen dichten und thermisch isolierenden Tank (2), der eine Dichtungsmembran (14, 15) umfasst, die das Flüssiggas umgibt, wobei die Dichtungsmembran von einem Isolierraum (16, 17) umgeben ist, der die Dichtungsmembran von einer Stützwand (11) trennt, die ihrerseits dicht ist, wobei der Isolierraum mit thermisch isolierenden Feststoffen und einem Inertgas gefüllt ist, wobei der Isolierraum mit mindestens einer Einspritzleitung (21, 22) und mindestens einer Abzugsleitung (23, 24) zum Einspritzen bzw. Abziehen des Inertgases versehen ist, wobei der Tank mindestens einen Drucksensor (221 bis 224) und eine Vielzahl von Temperatursensoren (111, 114, 130) umfasst, die dazu konfiguriert sind, den Druck bzw. die Temperatur des in einem freien Volumen des Isolierraums eingeschlossenen Inertgases zu bestimmen, wobei die Anlage Durchflussmessvorrichtungen (121 bis 128, 221 bis 228, 325 bis 328) zum Messen eines Inertgasdurchsatzes in der Einspritzleitung (21, 22) und in der Abzugsleitung (23, 24) und mindestens eine Leckerkennungsvorrichtung (80) umfasst, wobei die mindestens eine Leckerkennungsvorrichtung (80) zu Folgendem konfiguriert ist:

Bestimmen einer ersten Inertgasmassenänderung ($\Delta$M1, $\Delta$M3) zwischen einem ersten Zeitpunkt (t1) und einem zweiten Zeitpunkt (t2) mit den Durchsatzmessvorrichtungen (121 bis 128, 221 bis 228, 325 bis 328), wobei die erste Änderung der Resultierenden der Inertgasgesamtmassen, die zwischen dem ersten Zeitpunkt und dem zweiten Zeitpunkt durch die Einspritzleitung zugeführt bzw. durch die Abzugsleitung abgeführt wurden, entspricht,

wobei die Anlage **dadurch gekennzeichnet ist, dass** die Leckerkennungsvorrichtung (80) ferner zu Folgendem konfiguriert ist:

Bestimmen einer ersten Inertgasmasse im Isolierraum zum ersten Zeitpunkt und einer zweiten Inertgasmasse im Isolierraum zum zweiten Zeitpunkt anhand von Druck- und Temperaturmessungen, die durch den mindestens einen Drucksensor (221 bis 224) und die Vielzahl von Temperatursensoren (111, 114, 130) in einem freien Volumen des Isolierraums durchgeführt werden, Berechnen einer zweiten Inertgasmassenänderung ($\Delta$M2, $\Delta$M4) zwischen dem ersten Zeitpunkt und dem zweiten Zeitpunkt, die der Differenz zwischen der zweiten und der ersten Inertgasmasse entspricht, und Vergleichen der ersten Inertgasmassenänderung mit der zweiten Inertgasmassenänderung und Auslösen eines Alarms, wenn eine Abweichung (E1, E2) zwischen der ersten und der zweiten Inertgasmassenänderung über einem ersten Schwellenwert (S1) liegt.

21. Flüssiggasspeicheranlage nach dem vorangehenden Anspruch, wobei es sich bei der Dichtungsmembran um eine sekundäre Dichtungsmembran (14) handelt, wobei es sich bei dem Isolierraum um einen sekundären Isolierraum (17) handelt und wobei der Tank eine primäre Dichtungsmembran (15) umfasst, die sich zwischen der sekundären Dichtungsmembran (14) und dem Flüssiggas befindet, wobei die sekundäre Dichtungsmembran (14) und die primäre Dichtungsmembran (15) durch einen primären Isolierraum (16), der mit thermisch isolierenden Feststoffen und einem Inertgas gefüllt ist, voneinander getrennt sind.

22. Flüssiggasspeicheranlage nach Anspruch 20, wobei es sich bei der Dichtungsmembran um eine primäre Dichtungsmembran (15) handelt, wobei es sich bei dem Isolierraum um einen primären Isolierraum (16) handelt, wobei es sich bei der Abweichung um eine primäre Abweichung (E1) handelt und wobei der Tank eine sekundäre Dichtungsmembran (14) umfasst, die sich zwischen der primären Dichtungsmembran (15) und der Stützwand (11) befindet, wobei die primäre Dichtungsmembran (15) und die sekundäre Dichtungsmembran (14) durch den primären Isolierraum (16) voneinander getrennt sind, wobei die sekundäre Dichtungsmembran (14) und die Stützwand (11) durch einen sekundären Isolierraum (17), der mit thermisch isolierenden Feststoffen und einem Inertgas gefüllt ist, voneinander getrennt sind.

23. Flüssiggasspeicheranlage nach dem vorangehenden Anspruch, wobei der sekundäre Isolierraum mit mindestens einer Einspritzleitung (22) und mindestens einer Abzugsleitung (24) zum Einspritzen bzw. Abziehen des Inertgases versehen ist, wobei der Tank mindestens einen Drucksensor (222, 224) umfasst, wobei Sensoren (111, 114) der Vielzahl von Temperatursensoren auch dazu konfiguriert sind, die Temperatur des im sekundären Isolierraum (17) eingeschlossenen Inertgases zu bestimmen, wobei die Anlage Durchsatzmessvorrichtungen (122, 124, 126, 128, 222, 224, 226, 228, 326, 328) zum Messen eines Inertgasdurchsatzes in der Einspritzleitung (22) und in der Abzugsleitung (24) umfasst und wobei die Leckerkennungsvorrichtung (80) dazu konfiguriert ist, das Verfahren nach einem der Ansprüche 4 bis 19 durchzuführen.

24. Flüssiggastransportschiff, **dadurch gekennzeichnet, dass** es eine oder mehrere Flüssiggasspeicheranlagen nach einem der Ansprüche 20 bis 23 umfasst.

## Claims

1. A method for detection of a leak from a sealed, thermally insulating tank (2) for liquid gas, said tank comprising a sealing membrane (14, 15) surrounding the liquid gas, the sealing membrane being surrounded by an insulation space (16, 17) which separates the sealing membrane from a support wall (11), which itself is sealed, the insulation space being filled with solid, thermally insulating materials and an inert gas, the insulation space being provided with at least one injection duct (21, 22) and at least one extraction duct (23, 24) in order to inject and extract the inert gas, the detection method comprising the following steps:

determining (921, 923) a first variation of mass of inert gas ($\Delta$M1, $\Delta$M3) between a first moment (t1) and a second moment (t2), the first variation corresponding to the resultant of the total masses of inert gas added by the injection duct and removed by the extraction duct, between the first moment and the second moment; the method for detection being **characterized in that** it moreover comprises the following steps :

determining a first mass of inert gas in the insulation space at the first moment and a second mass of inert gas in the insulation space at the second moment by means of measurements of the pressure and temperature in a free volume of the insulation space; calculating (922, 924) a second variation of mass of inert gas ($\Delta$M2, $\Delta$M4) between the first moment and the second moment, corresponding to the difference between the second mass and the first mass of inert gas; and comparing (931, 932) the first variation of mass of inert gas with the second variation of mass of inert gas, and triggering an alarm if a difference (E1, E2) between the first variation and the second variation of mass of inert gas is greater than a first threshold (S1).

2. The method as claimed in claim 1, wherein the sealing membrane is a secondary sealing membrane (14), wherein the insulation space is a secondary insulation space (17), and wherein the tank comprises a primary sealing membrane which is situated between the secondary sealing membrane and the liquid gas, the secondary sealing membrane and the primary sealing membrane being separated by a primary insulation space filled with solid, thermally insulating materials and inert gas.

3. The method as claimed in claim 1, wherein the sealing membrane is a primary sealing membrane (15), wherein the insulation space is a primary insulation space (16), the difference is a primary difference (E1), and wherein the tank comprises a secondary sealing membrane (14) which is situated between the primary sealing membrane (15) and the support wall (11), the primary sealing membrane and the secondary sealing membrane being separated by the primary insulation space (16), the secondary sealing membrane and the exterior wall being separated by a secondary insulation space (17) filled with solid, thermally insulating materials and inert gas.

4. The method as claimed in claim 3, the secondary insulation space (17) being provided with at least one injection duct (22) and at least one extraction duct (24) in order to inject and extract the inert gas, wherein the detection method also comprises the following steps:

   determining (923) a third variation of mass of inert gas ($\Delta$M3) in the secondary insulation space between the first moment (t1) and the second moment (t2), the third variation corresponding to the resultant of the total masses of inert gas added by the injection duct and removed by the extraction duct between the first moment and the second moment;
   determining a third mass of inert gas in the secondary insulation space at the first moment, and a fourth mass of inert gas in the secondary insulation space at the second moment by means of measurements of the pressure and temperature in a free volume of the secondary insulation space;
   calculating (924) a fourth variation of mass of inert gas ($\Delta$M4) in the secondary insulation space between the first moment and the second moment corresponding to the difference between the fourth mass and the third mass of inert gas; and
   comparing (932) the third variation of mass of inert gas ($\Delta$M3) with the fourth variation of mass of inert gas ($\Delta$M4), and triggering an alarm if a secondary difference (E2) between the third variation and the fourth variation of mass of inert gas is greater than a second threshold (S2).

5. The method as claimed in claim 4, wherein, if the primary difference (E1) is greater than the first threshold (S1) and/or if the secondary difference (E2) is greater than the second threshold (S2), and if the algebraic sum of the primary difference (E1) and the secondary difference (E2) is lower than a third threshold (S3), there is determination of the presence of a leak in the secondary sealing membrane (14).

6. The method as claimed in claim 4 or 5, wherein, if the primary difference (E1) is greater than the first threshold (S1) and/or if the secondary difference (E2) is greater than the second threshold (S2), and if the difference between the primary difference (E1) and the secondary difference (E2) is greater than a fourth threshold (S4), there is determination of the presence of a leak in at least one of the primary (16) and secondary (17) insulation spaces.

7. The method as claimed in one of the preceding claims, wherein there is reiteration of the preceding steps between a third moment (t3), corresponding to the first moment (t1) incremented by a confirmation time, and fourth moment (t4) corresponding to the second moment (t2) incremented by the confirmation time, and wherein the presence of a leak is determined if said alarm is triggered again after the confirmation time has elapsed.

8. The method as claimed in one of the preceding claims, which is carried out after a time longer than a predetermined stabilization time after filling of the tank.

9. The method as claimed in one of the preceding claims, wherein the measurements of the pressure and temperature are carried out for a measurement time around the first moment and around the second moment, with the first mass and the second mass being mean masses for the measurement time.

10. The method as claimed in claim 9, wherein the measurement time is short enough for the inert gas which is added or extracted during the measurement time to be negligible in relation to the total mass of inert gas which is present in the insulation space.

11. The method as claimed in claim 9, wherein no inert gas is added to, or extracted from, the insulation space during the measurement time.

12. The method as claimed in claim 9, wherein the measurement time is shorter than the time which separates the first moment and the second moment.

13. The method as claimed in one of the preceding claims, wherein the temperature measurements comprise measurements carried out by means of temperature sensors (111, 114) placed in a plurality of locations on the support wall (11) and on the secondary sealing membrane (14).

14. The method as claimed in one of the preceding claims, wherein the temperature measurements comprise estimates which are calculated on the basis of the temperature of the liquid gas and the level of liquid gas in the tank.

15. The method as claimed in one of the preceding claims, wherein the first variation of mass of inert gas ($\Delta M1$) is measured according to a mass flow of inert gas at an injection valve (25) of the injection duct (21) and an extraction valve (27) of the extraction duct (23).

16. The method as claimed in claim 15, wherein the mass flow at the injection valve (25) and/or the extraction valve (27) is determined according to a degree of opening of said valve.

17. The method as claimed in claim 15 or 16, wherein the mass flow of gas at the injection valve (25) and/or the extraction valve (27) is determined according to the pressure and the temperature of the inert gas upstream and downstream from said valve.

18. The method as claimed in claim 15, wherein the mass flow at the injection valve (25) and/or the extraction valve (27) is measured by a flowmeter (325, 327) measuring the mass of gas at said valve.

19. The method as claimed in one of the preceding claims, wherein the measurements of the pressure and the temperature in order to determine the first or second mass of inert gas in the insulation space are carried out in a plurality of areas of the insulation space, with all of the areas forming the free volume of the insulation space.

20. An installation for storage of liquid gas comprising a sealed, thermally insulating tank (2) which comprises a sealing membrane (14, 15) surrounding the liquid gas, the sealing membrane being surrounded by an insulation space (16, 17) which separates the sealing membrane from a support wall (11) which itself is sealed, the insulation space being filled with solid, thermally insulating materials and an inert gas, the insulation space being provided with at least one injection duct (21, 22) and at least one extraction duct (23, 24) in order to inject and extract the inert gas, wherein the tank comprises at least one pressure sensor (221 to 224) and a plurality of temperature sensors (111, 114, 130) which are configured to determine the pressure and the temperature of the inert gas enclosed in a free volume of the insulation space, wherein the installation comprises flow measurement devices (121 to 128, 221 to 228, 325 to 328) to measure a flow of inert gas in the injection duct (21, 22) and in the extraction duct (23, 24), and at least one leak detection device (80), the at least one leak detection device (80) being configured to:

determine together with the flow measurement devices (121 to 128, 221 to 228, 325 to 328) a first variation of mass of inert gas ($\Delta M1$, $\Delta M3$) between a first moment (t1) and a second moment (t2), with the first variation corresponding to the resultant of the total masses of inert gas added by the injection duct and removed by the extraction duct between the first moment and the second moment;
the installation being **characterized in that** the leak detection device (80) is moreover configured to :

determining a first mass of the inert gas in the insulation space at the first moment and a second mass of inert gas in the insulation space at the second moment by means of pressure and temperature measurements carried out by the at least one pressure sensor (221 to 224) and the plurality of temperature sensors (111, 114, 130) in a free volume of the insulation space;
calculating a second variation of mass of inert gas ($\Delta M2$, $\Delta M4$) between the first moment and the second moment corresponding to the difference between the second mass and the first mass of inert gas; and
comparing the first variation of mass of inert gas with the second variation of mass of inert gas, and triggering an alarm if a difference (E1, E2) between the first variation and the second variation of mass of inert gas is greater than a first threshold (S1).

21. The liquid gas storage installation as claimed in the preceding claim, wherein the sealing membrane is a secondary sealing membrane (14), wherein the insulation space is a secondary insulation space (17), and wherein the tank comprises a primary sealing membrane (15) which is situated between the secondary sealing membrane (14) and the liquid gas, the secondary sealing membrane (14) and the primary sealing membrane (15) being separated by a primary insulation space (16) which is filled with solid, thermally insulating materials and an inert gas.

22. The liquid gas storage installation as claimed in claim 20, wherein the sealing membrane is a primary sealing membrane (15), wherein the insulation space is a primary insulation space (16), wherein the difference is a primary difference (E1), and wherein the tank comprises a secondary sealing membrane (14) which is situated between the primary sealing membrane (15) and the support wall (11), the primary sealing membrane (15) and the secondary sealing membrane (14) being separated by the primary insulation space (16), the secondary sealing membrane (14) and the support wall (11) being separated by a secondary insulation space (17) which is filled with solid, thermally insulating materials and an inert gas.

23. The liquid gas storage installation as claimed in the preceding claim, wherein the secondary insulation space is provided with at least one injection duct (22) and at least one extraction duct (24) in order to inject and extract the inert gas, which tank comprises at least one pressure sensor (222,224), wherein sensors (111,114) of the plurality of temperature sensors are also configured to determine the temperature of the inert gas enclosed in the secondary insulation space (17), wherein the installation comprises flow measurement devices (122, 124, 126, 128, 222, 224, 226, 228, 326, 328) in order to measure a flow of inert gas in the injection duct (22) and in the extraction duct (24), and wherein the leak detection device (80) is configured to implement the method according to one of claims 4 to 19.

24. A liquid gas transport ship, **characterized in that** it comprises one or a plurality of liquid gas storage installations as claimed in one of claims 20 to 23.

FIG.1

EP 3 899 350 B1

FIG.2

FIG.3

FIG.4

FIG.5

FIG.6

FIG.7

FIG.8

FIG.9

**EP 3 899 350 B1**

## RÉFÉRENCES CITÉES DANS LA DESCRIPTION

**Documents brevets cités dans la description**

- US 4404843 A
- US 20170138536 A